# DEMANDE DE BREVET EUROPEEN

(11) **EP 4 825 697 A1**
(43) Date de publication de la demande: **21.10.2026**
(21) Numéro de dépôt: 26171802.7
(22) Date de dépôt: 12.04.2026
(51) Int. Cl.: B61B 12/00, B61B 12/06, G06V 20/59

(54) **PROCÉDÉ DE CONTRÔLE DE LA SÉCURITÉ ET DU CONFORT À L'INTÉRIEUR D'UN VÉHICULE D'UNE INSTALLATION DE TRANSPORT DE VÉHICULES PAR CÂBLES**

(30) Priorité: 14.04.2025 FR 2503993
(71) Demandeur: Bureau des Etudes de Câbles, 92260 Fontenay-aux-Roses (FR)
(72) Inventeur: Bécu, Hugo, 92260 Fontenay-aux-Roses (FR); Hochet, Marianne, 92330 Sceaux (FR)

(57) **Abrégé**

Procédé de contrôle (500) de la sécurité et du confort à l'intérieur d'un véhicule (2) d'une installation de transport de véhicules par câbles (100), le procédé comprenant une étape de mesure et/ou d'enregistrement en temps réel de données (200), vidéos et/ou sonores et/ou d'un ou de plusieurs paramètres physiques à l'intérieur d'un véhicule (2) réalisée par un ensemble de capteurs (9) ; une étape de transmission en temps réel des données (200) vers une unité de calcul (300), par l'intermédiaire d'un réseau de modules de communication (10a, 10b, 10c, 10d) ; une étape de traitement automatique en temps réel des données (200) réalisé par l'unité de calcul (300) ; une étape de détection automatique et en temps réel d'un évènement relatif à la sécurité et/ou la sureté et/ou l'intégrité du matériel et/ou l'utilisation et/ou le confort des usagers, par une analyse des données (200) par un module de détection (201) intégré dans l'unité de calcul (300) ; une étape de génération automatique, en temps réel et adaptative d'une consigne (400) réalisée par un module de commande (401) intégré dans une unité de calcul (300) ; une étape d'action automatique selon la consigne (400), en temps réel et adaptative à l'évènement détecté, avec le contrôle d'un dispositif (12) agissant à l'intérieur d'un véhicule (2), et/ou d'un dispositif situé en d'autres points de l'installation (100) et/ou sur d'autres systèmes agissant sur le fonctionnement de l'installation de transport par câble (100).

## Description

La présente invention se rapporte au domaine des installations de transport par câbles. L'invention concerne, plus particulièrement, les installations de transport comprenant au moins un câble tracteur aérien auquel les véhicules sont accouplés pour être tractés.

Différents types d'installations de transport par câbles existent. Certaines de ces installations utilisent un ou plusieurs câbles tracteurs, aériens, tels que les télécabines, les funitels et DMC, les 3S, les télésièges ou encore les téléportés avec sièges et cabines. D'autres installations utilisent un ou plusieurs câbles tracteurs accrochés aux véhicules roulant sur une voie ferrée, aérienne ou posée au sol, tels que les funiculaires. Ces installations de transport permettent le déplacement d'un ou plusieurs véhicules. Ces véhicules rendent possible l'acheminement de voyageurs et/ou de matériels entre plusieurs lieux. Ces véhicules sont également appelés cabines, bennes ou sièges.

Les installations de transport par câbles sont principalement connues pour un usage dans le cadre des sports d'hiver, avec le transport de skieurs entre deux points d'altitudes différentes. Au-delà de cette application, les installations de transport par câbles sont de plus en plus utilisées dans les zones urbaines comme un moyen de transport public.

Une distinction est faite entre les systèmes à mouvement va-et-vient et les systèmes à mouvement continu. Pour les systèmes à mouvement continu, plusieurs véhicules sont généralement suspendus et déplacés par un câble tracteur selon un mouvement circulaire le long d'une voie fermée établie entre au moins deux stations. Ces véhicules sont dépourvus d'agents d'exploitation ou de conducteur au cours de l'exploitation. Pour les systèmes à mouvement va-et-vient, deux véhicules possédant généralement une capacité plus importante que ceux d'une installation à mouvement continu, sont suspendus et déplacés par un câble porteur selon un mouvement d'aller et retour le long de deux voies établies entre deux stations. Les véhicules des systèmes de type va-et-vient sont dans certains cas occupés par au moins un agent d'exploitation, ou conducteur, au cours de l'exploitation.

Les passagers embarquent dans les véhicules dans une station et débarquent dans au moins une autre station de l'installation, la capacité unitaire des véhicules définissant le nombre maximal de passagers pouvant être accueillis simultanément dans un même véhicule.

Dans le cas d'une installation utilisée dans un contexte urbain de transport en commun, la fréquentation de l'installation est susceptible de fortement varier au cours d'une journée d'exploitation. Le niveau de remplissage des véhicules fermés de type cabine est donc fortement susceptible d'être variable au cours de l'exploitation. Ceci est tout particulièrement le cas pour les installations à mouvement continu pour lesquelles une noria de véhicules est en permanence en déplacement le long des voies de l'installation, offrant ainsi une capacité d'emport identique indépendante du niveau de fréquentation.

Lorsque la fréquentation d'une installation de transport par câbles est moindre, les véhicules peuvent être partiellement occupés et ainsi dans certains cas favoriser un sentiment d'insécurité chez les usagers. En l'absence de personnel d'exploitation à l'intérieur de chacun des véhicules en mouvement sur l'installation, ce sentiment est d'autant plus prégnant que les véhicules de type cabine d'une installation à mouvement continu possèdent un volume de l'ordre de la dizaine de mètres cubes, correspondant à une capacité d'emport maximale de l'ordre de la dizaine de personnes, renforçant :
- Le caractère de promiscuité dans le cas de la présence de quelques passagers ;
- Le caractère d'impunité pour les passagers mal intentionnés, aussi bien envers d'autres passagers qu'envers le matériel, favorisant ainsi les dégradations ou l'usage d'éléments de nature à remettre en question la sécurité ;
- Les incivilités, avec des nuisances sonores (musique) ou l'utilisation de cigarettes.

Les fortes variations de fréquentation des véhicules dans un contexte urbain, avec des pics associés aux heures de pointe, et dans des conditions météorologiques très différentes selon les saisons favorisent des évolutions notables de paramètres de l'air intérieur des véhicules. De ces paramètres dépendent notamment le ressenti des passagers en termes de confort thermique et d'appréhension en général. Parmi ces paramètres, interviennent entre autres le taux d'humidité, la température, le taux de concentration de certaines substances telles que le CO2, qui règnent au sein de l'enceinte fermée constituée par le véhicule.

### État de la technique antérieure

L'état de l'art montre des solutions pour détecter des évènements relatifs à la sécurité et à la bonne utilisation de systèmes de transport de type télésiège et télécabine. Ces solutions concernent spécifiquement les phases d'embarquement et de débarquement dans les stations, telles que proposées par les documents brevets EP 4257446A1, EP 4296137A1, EP 4339052A1, EP 4353564A1 et EP 4410628A1.

Selon une conception classique pour une utilisation urbaine, les véhicules fermés de type cabine, équipant les installations de transport par câbles à mouvement continu, sont dotées d'un ensemble de dispositifs destinés à garantir la sécurité et le confort au cours du transport :
- Une caméra située dans le plafond dont la captation vidéo est renvoyée vers une interface homme-machine au niveau d'un poste de contrôle, qui nécessite une action de sélection spécifique du véhicule par l'agent du contrôle pour le visionnage de l'intérieur du véhicule ciblé ;
- Un système d'interphonie pour établir la communication, à la demande spécifique d'un passager ou d'un agent de contrôle, entre le véhicule ciblé et le poste de contrôle ;
- Un dispositif d'aération basé sur la convection naturelle du flux d'air rencontré par le véhicule.

Dans certains cas particuliers, des dispositifs de régulation thermique de type climatisation, ou dispositif de ventilation réfrigérée, sont disposés dans chaque véhicule pour assurer un maintien de la température intérieure à un niveau acceptable de confort.

Selon le principe de fonctionnement classiquement rencontré du système d'interphonie équipant les véhicules, la communication entre la cabine et le poste de contrôle est établie à la demande, soit de celle du passager qui active un bouton dédié, soit de celle de l'agent situé au poste de contrôle qui sélectionne la cabine avec laquelle il souhaite établir la communication de façon ciblée.

En particulier, l'état de l'art ne montre pas de solution permettant d'identifier et d'anticiper de façon automatique, en temps réel et de manière adaptative :
- Le besoin d'établir une communication entre au moins un véhicule et un poste de commande afin de prévenir un danger imminent ;
- La survenue d'une situation à risque, avec par exemple la détection d'un comportement inadapté d'un usager ;
- Et de façon plus générale, un évènement relatif à la sécurité et/ou au confort des passagers ;
parmi la noria de véhicules circulant sur une ligne d'une installation de transport par câbles, comportant éventuellement plusieurs stations intermédiaires.

Selon le principe de fonctionnement classiquement rencontré des dispositifs d'aération des véhicules, ces derniers ne sont généralement pas réglables et demeurent passifs.

En particulier, il n'existe pas de dispositifs de contrôle des paramètres d'influence sur le ressenti des passagers à l'intérieur des véhicules, et en relation avec la sécurité et au confort, qui soit adaptatifs en fonction :
- De l'état de fonctionnement du système ;
- De l'état de remplissage des véhicules ;
- Et plus généralement de l'état des paramètres réels d'influence contribuant au ressenti global à l'intérieur des véhicules.

De façon générale, l'état de l'art ne montre pas de solution pour surveiller, contrôler et agir de façon automatique, adaptative et en temps réel sur des paramètres d'influence relatifs au confort, à la sécurité et la sureté au sein des véhicules fermés de type cabine des installations de transport par câbles.

### Résumé de l'invention

La présente invention a pour objet de palier au moins un des inconvénients précités et de conduire en outre à d'autres avantages en proposant un nouveau procédé de contrôle de la sécurité et du confort à l'intérieur d'un véhicule d'une installation de transport de véhicules par câbles.

Un autre but de l'invention est d'améliorer le confort des passagers ainsi que leur sécurité durant leur déplacement par l'installation de transport de véhicules par au moins un câble mobile.

Selon un mode de réalisation, l'invention fournit un procédé de contrôle de la sécurité et du confort à l'intérieur d'un véhicule d'une installation de transport de véhicules par câbles, le procédé comprenant au moins une des étapes suivantes :
- Une étape de mesure et/ou d'enregistrement, en temps réel, de paramètres physiques, d'images et/ou de sons à l'intérieur du véhicule ;
- Une étape de transmission en temps réel des informations vers une unité de calcul, par l'intermédiaire d'un module de communication ;
- Une étape de traitement automatique en temps réel des données issues de l'étape de mesure et/ou d'enregistrement de paramètres physique, d'images et/ou de sons à l'intérieur des véhicules ;
- Une étape de détection automatique en temps réel d'un évènement et/ou d'une configuration en lien avec la sécurité, la sureté, le confort des passagers transportés à l'intérieur des véhicules ;
- Une étape de génération automatique de consignes en temps réel visant à maximiser le niveau de sécurité, la sureté, la bonne utilisation et/ou le confort des passagers transportés dans les véhicules de l'installation de transport par câbles ;
- Une étape d'action en temps réel avec le contrôle d'un dispositif agissant de façon automatique à l'intérieur du véhicule et/ou en d'autres points et/ou sur d'autres sous-systèmes en lien avec le fonctionnement de l'installation de transport par câbles.

L'invention permet ainsi un contrôle en temps réel de la sécurité et du confort à l'intérieur des véhicules situés sur l'installation de transport par câbles, indépendamment de la position du véhicule sur la ligne ou dans les stations, afin de détecter de façon ciblée, de prévenir, d'alerter les opérateurs et d'agir par l'intermédiaire de dispositifs actionné directement à l'intérieur des véhicules, à partir d'une analyse en temps réel des données récoltées et/ou par la transmission d'information à distance auprès d'une unité de contrôle. Les informations transmises peuvent également servir d'outil d'aide à la décision pour l'exploitant de l'installation de transport par câbles.

Selon un mode de réalisation, l'étape d'enregistrement vidéo à l'intérieur d'un véhicule d'une installation de transport par câble est réalisée par au moins une caméra positionnée à l'intérieur du véhicule.

Selon un mode de réalisation, l'étape de traitement en temps réel des données issues de l'enregistrement vidéo est réalisée en temps réel par une unité de calcul.

Selon un mode de réalisation, l'étape de détection en temps réel d'un évènement à l'intérieur du véhicule, relatif avec la sécurité et/ou la sureté et/ou l'intégrité du matériel et/ou l'utilisation et/ou le confort des passagers, est réalisée en temps réel à partir d'un modèle de reconnaissance d'image basé sur des techniques d'apprentissage automatique de type intelligence artificielle.

Selon un mode de réalisation, l'étape d'action en temps réel, avec le contrôle d'un dispositif agissant à l'intérieur du véhicule et/ou en d'autres points et/ou sur d'autres systèmes de l'installation de transport par câble, est réalisée à partir d'une consigne générée par un modèle basé sur des techniques d'apprentissage automatique de type intelligence artificielle et analysant les données issues de l'enregistrement vidéo.

Selon un mode de réalisation, l'étape d'enregistrement sonore à l'intérieur d'un véhicule d'une installation de transport par câble est réalisée par au moins un microphone positionné à l'intérieur du véhicule.

Selon un mode de réalisation, l'étape de traitement en temps réel des données issues de l'enregistrement sonore est réalisée en temps réel par une unité de calcul.

Selon un mode de réalisation, l'étape de détection en temps réel d'un évènement, à l'intérieur du véhicule, relatif avec la sécurité et/ou la sureté et/ou l'intégrité du matériel et/ou l'utilisation et/ou le confort des passagers est réalisée en temps réel à partir d'un modèle de reconnaissance sonore, basé sur des techniques d'apprentissage automatique de type intelligence artificielle.

Selon un mode de réalisation, l'étape d'action en temps réel, avec le contrôle d'un dispositif agissant à l'intérieur du véhicule et/ou en d'autres points et/ou sur d'autres systèmes de l'installation de transport par câble, est réalisée à partir d'une consigne générée par un modèle basé sur des techniques d'apprentissage automatique de type intelligence artificielle et analysant les données issues de l'enregistrement sonore à l'intérieur du véhicule.

Selon un mode de réalisation, l'étape de mesure d'un ou de plusieurs paramètres physiques à l'intérieur d'un véhicule d'une installation de transport par câble, en lien avec la sécurité et/ou la sureté et/ou l'intégrité du matériel et/ou l'utilisation et/ou le confort des passagers, est réalisée par au moins un capteur de température, un capteur d'humidité, un capteur de fumée, un capteur de CO2, un capteur de luminosité, un accéléromètre, un capteur de position GPS, un capteur de pression, une caméra thermique, un compteur de passage, une caméra, positionnés à l'intérieur du véhicule,

Selon un mode de réalisation, l'étape de traitement en temps réel des données issues de la mesure d'un ou de plusieurs paramètres physiques à l'intérieur d'un véhicule d'une installation de transport par câble, en lien avec la sécurité et/ou la sureté et/ou l'intégrité du matériel et/ou l'utilisation et/ou le confort des passagers, est réalisée en temps réel par une unité de calcul.

Selon un mode de réalisation, l'étape de détection en temps réel d'une configuration anormale à l'intérieur du véhicule, relative à la sécurité et/ou la sureté et/ou l'intégrité du matériel et/ou l'utilisation et/ou le confort des passagers, est réalisée en temps réel à partir d'un modèle basé sur des techniques d'apprentissage automatique de type intelligence artificielle et établies sur la base des données issues de la mesure d'un ou de plusieurs paramètres physiques à l'intérieur du véhicule d'une installation de transport par câble.

Selon un mode de réalisation, l'étape d'action en temps réel, avec le contrôle d'un dispositif agissant à l'intérieur du véhicule, et/ou en d'autres points et/ou sur d'autres systèmes de l'installation de transport par câble, est réalisée à partir d'une consigne générée par un modèle basé sur des techniques d'apprentissage automatique de type intelligence artificielle et analysant les données issues de la mesure d'un ou de plusieurs paramètres physiques à l'intérieur du véhicule.

Selon un mode de réalisation, l'étape d'action en temps réel consiste en une alerte envoyée depuis le véhicule à l'interface homme-machine positionnée au poste de contrôle et de commande de l'installation de transport par câble.

Selon un mode de réalisation, l'étape d'action en temps réel consiste en l'émission d'un signal sonore à l'intérieur du ou des véhicules par l'intermédiaire de haut-parleurs.

Selon un mode de réalisation, le signal sonore consiste en un message dont le contenu est défini à partir de l'étape de détection et/ou d'identification d'un évènement particulier et/ou de l'évolution d'un paramètre relatif à la sécurité et/ou la sureté et/ou l'intégrité du matériel et/ou l'utilisation et/ou le confort des passagers.

Selon un mode de réalisation, l'étape d'action en temps réel consiste à identifier le véhicule ayant fait l'objet de la détection d'un évènement, et/ou de l'évolution d'un paramètre relatif à la sécurité et/ou la sureté et/ou l'intégrité du matériel et/ou l'utilisation et/ou le confort des passagers, pour contrôler le déplacement, l'arrêt et/ou la manœuvre des portes dans la prochaine station vers laquelle le véhicule est dirigé.

Selon un mode de réalisation, l'étape d'action en temps réel consiste à enregistrer, transmettre à distance et stocker sur un serveur dédié les images vidéo à l'issue de la détection d'un évènement et/ou de l'évolution d'un paramètre relatif à la sécurité et/ou la sureté et/ou l'intégrité du matériel et/ou l'utilisation et/ou le confort des passagers.

Selon un mode de réalisation, l'étape d'action en temps réel consiste à contrôler un dispositif situé à l'intérieur du véhicule et agissant directement sur un paramètre physique d'influence sur la sécurité et/ou la sureté et/ou l'intégrité du matériel et/ou l'utilisation et/ou le confort des passagers, tel qu'un dispositif de régulation de la température, de l'humidité, de désenfumage, d'extinction incendie, d'adaptation de la luminosité, d'éclairage, de filtrage des rayons lumineux extérieurs.

Selon un mode de réalisation, l'étape d'action en temps réel consiste à diffuser un contenu visuel, tel que des messages dont le contenu est défini à partir :
- De l'étape de détection et/ou d'identification d'un évènement particulier et/ou de l'évolution d'un paramètre relatif à la sécurité et/ou la sureté et/ou l'intégrité du matériel et/ou l'utilisation et/ou le confort des passagers ;
- Des données issues de l'enregistrement vidéo, sonore et/ou de la mesure d'au moins un paramètre physique à l'intérieur d'un véhicule d'une installation de transport par câble.

Selon un mode de réalisation, l'étape d'action en temps réel consiste à actionner un mécanisme de manœuvre des dispositifs d'assise à l'intérieur du véhicule afin de libérer de l'espace pour l'accueil d'un élément spécifique, tel qu'un fauteuil pour personne à mobilité réduite, un ou plusieurs vélos, un chargement spécifique. L'actionnement est réalisé à partir de l'analyse des données issues de l'enregistrement vidéo, sonore et/ou de la mesure d'au moins un paramètre physique à l'intérieur du véhicule d'une installation de transport par câble.

Selon un mode de réalisation, l'invention fournit un programme d'ordinateur comprenant des portions de codes de programme pour l'exécution du procédé de contrôle de la sécurité et du confort à l'intérieur d'un véhicule d'une installation de transport par câbles selon l'invention, lorsque ledit programme est exécuté sur un ordinateur.

Selon un mode de réalisation, l'invention fournit enfin un programme d'ordinateur comprenant un ensemble d'instructions qui, une fois chargées sur un ordinateur, permettent la mise en œuvre du procédé de contrôle de la sécurité et du confort à l'intérieur d'un véhicule d'une installation de transport de véhicules par un câble selon l'invention.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part.

### Brève description des dessins

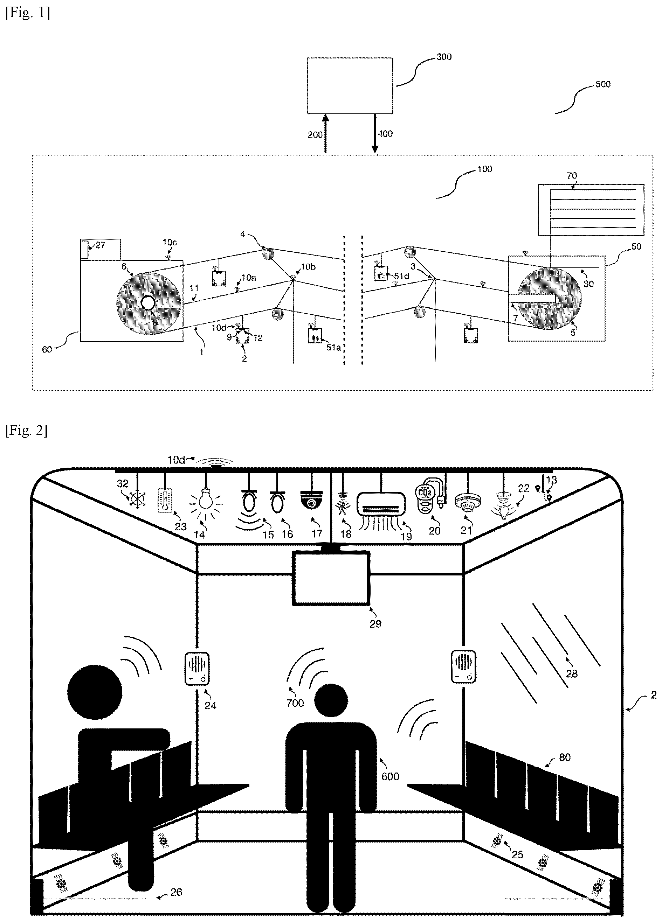

[Fig. 1] La figure 1 est une illustration schématique d'une installation de transport utilisant au moins un câble mobile et un véhicule, et utilisant le procédé de contrôle de l'invention.
[Fig. 2] La figure 2 est une illustration schématique d'un mode de réalisation des dispositifs de mesure et de contrôle à l'intérieur d'un véhicule de type cabine d'une installation de transport de véhicules par câbles, agissant selon le procédé de contrôle de l'invention.

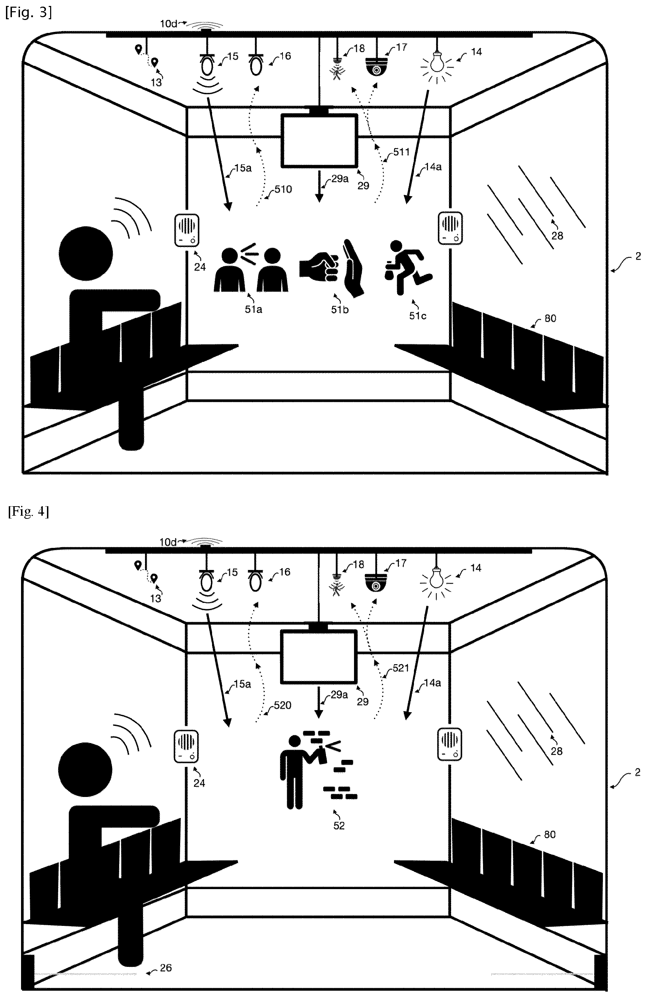

[Fig. 3] La figure 3 est une illustration schématique d'un mode de réalisation de la détection d'un évènement de type agression, bagarre, délinquance sur la personne à l'intérieur d'un véhicule d'une installation de transport par câbles et de l'actionnement d'un dispositif en réponse à cet évènement, agissant selon le procédé de contrôle de l'invention.
[Fig. 4] La figure 4 est une illustration schématique d'un mode de réalisation de la détection d'un évènement de type dégradation du matériel à l'intérieur d'un véhicule d'une installation de transport par câbles et de l'actionnement d'un dispositif en réponse à cet évènement, agissant selon le procédé de contrôle de l'invention.

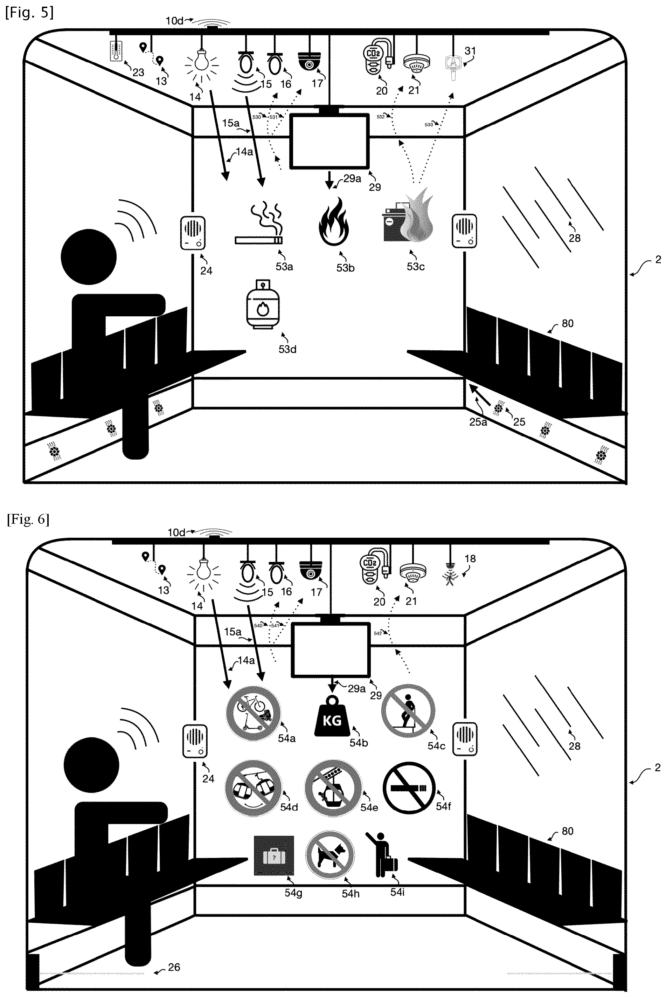

[Fig. 5] La figure 5 est une illustration schématique d'un mode de réalisation de la détection d'un évènement de type incendie à l'intérieur d'un véhicule d'une installation de transport par câbles et de l'actionnement d'un dispositif en réponse à cet évènement, agissant selon le procédé de contrôle de l'invention.
[Fig. 6] La figure 6 est une illustration schématique d'un mode de réalisation de la détection d'un évènement de type mauvaise utilisation par les usagers à l'intérieur d'un véhicule d'une installation de transport par câbles et de l'actionnement d'un dispositif en réponse à cet évènement, agissant selon le procédé de contrôle de l'invention.

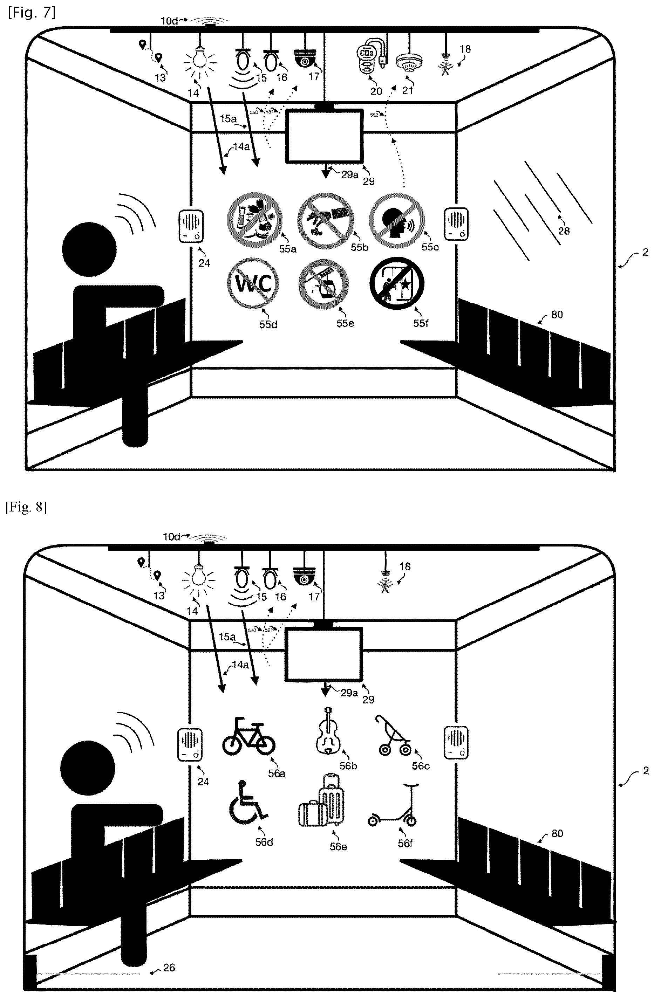

[Fig. 7] La figure 7 est une illustration schématique d'un mode de réalisation de la détection d'un évènement de type mauvaise utilisation par les usagers à l'intérieur d'un véhicule d'une installation de transport par câbles et de l'actionnement d'un dispositif en réponse à cet évènement, agissant selon le procédé de contrôle de l'invention.
[Fig. 8] La figure 8 est une illustration schématique d'un mode de réalisation de la détection d'un évènement de type embarquement d'un objet spécial à l'intérieur d'un véhicule d'une installation de transport par câbles et de l'actionnement d'un dispositif en réponse à cet évènement, agissant selon le procédé de contrôle de l'invention.

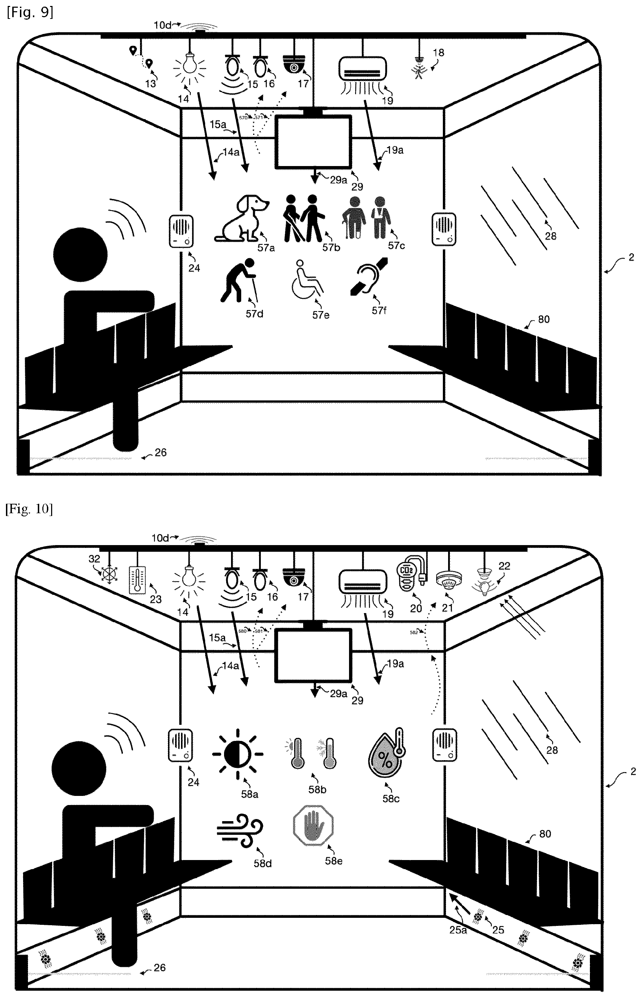

[Fig. 9] La figure 9 est une illustration schématique d'un mode de réalisation de la détection d'un évènement de type transport spécifique d'un usager à l'intérieur d'un véhicule d'une installation de transport par câbles et de l'actionnement d'un dispositif en réponse à cet évènement, agissant selon le procédé de contrôle de l'invention.
[Fig. 10] La figure 10 est une illustration schématique d'un mode de réalisation de la détection d'un évènement en lien avec l'influence des conditions externes à l'intérieur d'un véhicule d'une installation de transport par câbles et de l'actionnement d'un dispositif en réponse à cet évènement, agissant selon le procédé de contrôle de l'invention.

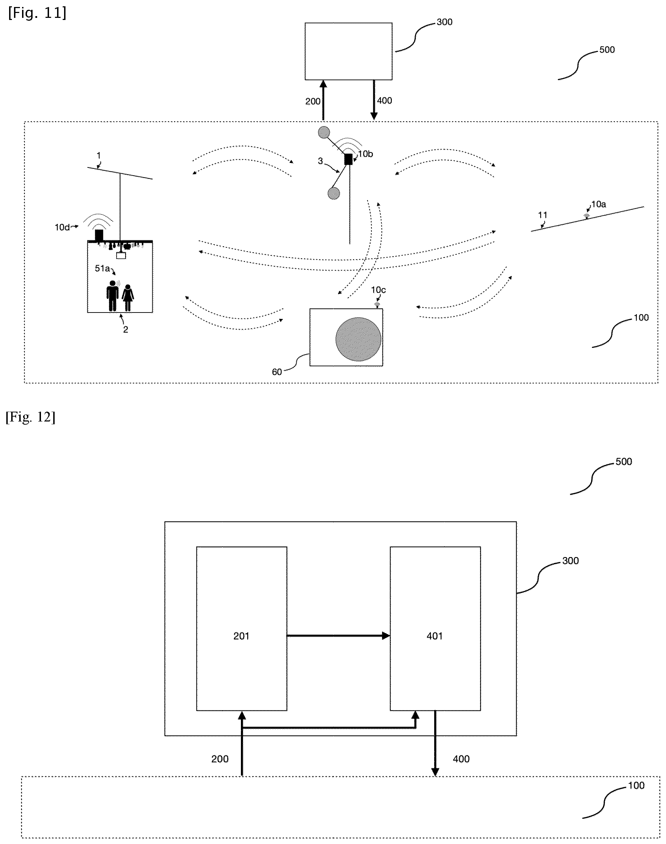

[Fig. 11] La figure 11 est une illustration schématique d'un mode de réalisation de la communication à distance des données établie entre les véhicules, les relais disposés sur les stations, les pylônes, les câbles aériens et l'unité de calcul, pour la mise en œuvre du procédé de contrôle de l'invention.
[Fig. 12] La figure 12 montre un mode de réalisation de l'étape de détection automatique en temps réel d'un évènement et de la génération automatique en temps réel et adaptative de consigne pour l'actionnement d'un dispositif en réponse à l'évènement, agissant selon le procédé de contrôle de l'invention.

### Description des modes de réalisation

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

La figure 1 montre une installation de transport 100 utilisant le procédé de contrôle 500 selon l'invention. L'installation de transport 100 comprend un câble 1 mobile et guidé et supporté par une pluralité de supports intermédiaires 3, également désignés par pylônes. Les supports intermédiaires 3 possèdent individuellement un appui 4 qui constitue l'interface de contact avec le câble 1. Les appuis 4 sont désignés par la personne du métier par balancier, sabot, banane de déviation, selon que le type d'appui et si le câble est fixe ou mobile. Dans un mode de réalisation non représenté, l'installation de transport 100 comporte une pluralité de câbles 1 pouvant être fixe ou mobile.

Le câble 1 est un câble tracteur et porteur, c'est-à-dire que le câble 1 assure à la fois une fonction de traction et de support des véhicules 2 accrochés au câble 1. Le câble 1 est continu en boucle fermée. Le câble 1 est un câble métallique comportant une pluralité de brins de fil métallique qui sont torsadés en une hélice. Le câble est composé principalement d'acier.

L'installation de transport 100 comporte par ailleurs des véhicules 2. Les véhicules 2 peuvent servir au transport de personnes et/ou de matériels. Les véhicules 2 sont configurés pour être accouplés au câble 1 et tractés par ce dernier. Plus particulièrement, l'installation de transport 100 peut être une télécabine, et dans ce cas les véhicules 2 sont fermés, ou un télésiège où les véhicules 2 sont ouverts. Dans un mode de réalisation non représenté, l'installation de transport 100 peut comprendre d'autres câbles tracteurs et/ou porteurs, notamment lorsque les véhicules 2 ont une capacité d'emport importante et sont lourds. Ces autres câbles peuvent être tracteurs ou porteurs.

L'installation de transport 100 comprend également deux stations d'extrémité 50, 60 pour l'embarquement et/ou le débarquement des personnes et/ou de matériel dans les véhicules 2. Les stations 50, 60 sont aussi appelées gares. Ainsi, comme l'illustre la figure 1, le câble 1 permet de déplacer par traction les véhicules 2 de la première station 50 à la deuxième station 60, et inversement.

Dans un mode de réalisation non représenté, l'installation de transport peut comprendre au moins une station intermédiaire située le long du câble. Elle est aussi destinée à l'embarquement et/ou au débarquement de passagers et/ou au transbordement de matériel selon le type d'utilisation de l'installation de transport 100.

La translation du câble 1 est assurée par une poulie motrice 6, elle-même entraînée par un dispositif d'entraînement 8 composé d'un ensemble moto-réducteur de la station d'extrémité 60, appelée également station motrice. La station d'extrémité 50 comporte, quant à elle, une poulie de renvoi 5 non motorisée couplée à un système de tension 7 du câble 1. La poulie de renvoi 5 n'est donc pas pilotée par le dispositif d'entraînement principal 9 ou un autre dispositif d'entraînement. La poulie de renvoi 5 est libre en rotation. La poulie de renvoi est aussi appelée poulie folle.

Dans un autre mode de réalisation non représenté, le système de mise en tension est situé dans la station motrice 60. Le système de mise en tension comprend un chariot mobile de mise en tension du câble 1, le chariot supportant la poulie motrice 6. La poulie motrice 6 joue alors un rôle combiné, à la fois de tension et moteur.

Des câbles aériens 11 sont établis entre les stations 50, 60 et les pylônes 3. Ces câbles sont fixes et permettent la transmission d'énergie et/ou d'informations entre les stations le long de la ligne de l'installation de transport par câbles 100.

Des capteurs 9 de mesure visuelle, sonore et/ou de paramètres physiques sont positionnés à l'intérieur des véhicules 2 pour l'acquisition en temps réel et/ou l'enregistrement de données 200 à l'intérieur des véhicules 2 au cours de leur déplacement le long de l'installation de transport par câbles 100, selon le procédé 500 de contrôle de la sécurité et du confort des véhicules 2 de l'installation de transport par câbles 100.

Dans un mode de réalisation, les capteurs 9 sont des :
- Caméras qui enregistrent des images à l'intérieur des véhicules 2 ;
- Microphones qui enregistrent des sons à l'intérieur des véhicules 2 ;
- Traceurs GPS qui suivent la position en temps réel et les paramètres du mouvement du véhicule 2 ;
- Détecteurs de mouvement à l'intérieur du véhicule 2 ;
- Capteurs qui détectent la quantité d'un gaz à l'intérieur du véhicule 2, tel que le CO2 ;
- Détecteurs de fumée dégagée à l'intérieur du véhicule 2 ;
- Capteurs qui mesurent le niveau de luminosité à l'intérieur et/ou à l'extérieur du véhicule 2 ;
- Bornes d'appel qui permettent d'enregistrer des sons à l'intérieur du véhicule 2 ;
- Capteurs qui permettent de mesurer la température à l'intérieur du véhicule 2 ;
- Accéléromètres qui permettent de mesurer l'accélération ressentie à l'intérieur du véhicule 2.

Une unité de calcul 300 assure en temps réel :
- L'analyse des données 200 collectées à l'intérieur des véhicules 2 ;
- La génération de consignes 400 transmises
   o Aux effecteurs embarqués dans les véhicules 2
   o Aux effecteurs positionnés en différents points et agissant sur le fonctionnement de l'installation de transport par câbles 100, tel qu'au poste de contrôle et de commande 27
selon le procédé 500 de contrôle de la sécurité et du confort des véhicules 2 de l'installation de transport par câbles 100.

Les évènements susceptibles de survenir à l'intérieur des véhicules 2, au cours de leur déplacement le long de l'installation de transport par câbles, peuvent par exemple être des évènements impliquant une intervention humaine, tels qu'une situation d'agression verbale 51a entre passagers ou une dégradation du matériel à l'intérieur du véhicule 2.

Des modules de communication 10 sont positionnés sur les véhicules 2 et en différents points de l'installation de transport par câbles pour la transmission à distance :
- Des données 200 émises par les capteurs 9 situés dans les véhicules 2 ;
- Des consignes 400 reçues par les effecteurs situés dans les véhicules 2 et en différents points de l'installation de transport par câbles 100 ;
selon le procédé 500 de contrôle de la sécurité et du confort des véhicules 2 de l'installation de transport par câbles 100.

Dans un mode de réalisation, des modules de communication 10a sont positionnés sur les câbles aériens fixes tendus entre les pylônes 3 de l'installation de transport par câbles.

Dans un mode de réalisation, des modules de communication 10b sont positionnés sur les pylônes 3 de l'installation de transport par câbles.

Dans un mode de réalisation, des modules de communication 10c sont positionnés sur les stations 50, 60 de l'installation de transport par câbles.

Dans un mode de réalisation, des modules de communication 10d sont positionnés sur les véhicules 2 de l'installation de transport par câbles.

Des effecteurs 12 sont positionnés à l'intérieur des véhicules 2 pour agir sur des paramètres physiques et/ou tout élément à l'intérieur des véhicules ayant une influence directe ou indirecte sur la sécurité et/ou le confort des passagers, selon le procédé 500 de contrôle de la sécurité et du confort des véhicules 2 de l'installation de transport par câbles 100.

Les capteurs 9 et les effecteurs 12 situés à l'intérieur des véhicules 2 permettent de détecter et d'agir en temps réel directement et/ou indirectement sur des évènements relatifs à la sécurité, la sureté, la bonne utilisation, le confort des passagers et des êtres vivants transportés par les véhicules 2, susceptibles de survenir à l'intérieur des véhicules 2 au cours de leur déplacement le long de l'installation de transport par câbles 100.

Les consignes 400 sont également transmises aux organes de contrôle et de commande du fonctionnement général de l'installation de transport par câbles 100 afin d'agir, le cas échéant, sur le déplacement du ou des câbles 1 et des véhicules 2, selon le procédé 500 de contrôle de la sécurité et du confort des véhicules 2 de l'installation de transport par câbles 100.

Le procédé de contrôle 500 de la sécurité et du confort à l'intérieur d'un véhicule d'une installation de transport de véhicules par câbles va maintenant être décrit.

Un système de calcul est configuré pour mettre en œuvre le procédé 500. Le système de calcul peut être une unité centrale comportant au moins un processeur monocœur ou multicœurs. Dans un autre mode de réalisation, le système de calcul est un serveur informatique distant auquel le procédé a accès par une connexion filaire ou par une connexion sans fil via un réseau de communication, tel qu'internet. La connexion au réseau de communication peut être sécurisée.

Le procédé de contrôle 500 comprend une étape de mesure et/ou d'enregistrement en temps réel de données 200, vidéos et/ou sonores et/ou d'un ou de plusieurs paramètres physiques, à l'intérieur d'un véhicule 2 d'une installation de transport par câble et susceptibles de caractériser la survenue d'un évènement relatif à la sécurité et/ou la sureté et/ou l'intégrité du matériel et/ou l'utilisation et/ou le confort des usagers, la mesure étant réalisée par un ensemble de capteurs 9.

La figure 2 montre un mode de réalisation de l'étape de mesure et/ou d'enregistrement en temps réel, de paramètres physiques, d'images et/ou de sons à l'intérieur du véhicule 2, par des dispositifs de mesure agissant selon le procédé 500 de contrôle de l'invention.

Dans un mode de réalisation montré par la figure 2, un ensemble de capteurs sont disposés à l'intérieur du véhicule 2 afin de mesurer et enregistrer en temps réel les évolutions de grandeurs physiques au sein du véhicule 2 au cours de son déplacement le long de l'installation de transport par câbles 100 pour mettre en œuvre le procédé 500.

Dans un mode de réalisation montré par la figure 2 :
- Un GPS embarqué 13 suit en temps réel des paramètres de déplacement du véhicule 2 le long de l'installation de transport par câble, tels que la position ou la vitesse ;
- Un microphone 16 mesure en temps réel les signaux acoustiques perceptibles à l'intérieur du véhicule 2 tels que les sons 700 émis par une source positionnée à l'intérieur du véhicule, la source pouvant être par exemple un être vivant 600 transporté à l'intérieur du véhicule 2 ;
- Une caméra 17 enregistre en temps réel des images à l'intérieur et/ou à l'extérieur du véhicule 2 ;
- Un détecteur de mouvement 18 détecte en temps réel les mouvements d'objet et/ou d'être vivant à l'intérieur du véhicule 2 ;
- Un capteur 20 mesure la concentration de gaz, tel que le CO2, contenu dans l'air à l'intérieur du véhicule 2 ;
- Un détecteur de fumée 21 détecte en temps réel la présence de fumée ou de vapeur dans l'air ;
- Un détecteur de luminosité 22 capte en temps réel les variations de lumière en temps réel à l'intérieur ou à l'extérieur du véhicule 2 ;
- Un capteur de température 23 mesure en temps réel la température à l'intérieur ou à l'extérieur du véhicule 2 ;
- Un accéléromètre 32 mesure en temps réel l'accélération ressentie à l'intérieur du véhicule 2 ;
- Un interphone 24 permet d'établir une communication sonore, à la demande ou de façon automatique, avec un passager situé à l'intérieur du véhicule 2 ;
- Un capteur de passage 26 permet de détecter le passage d'un objet et/ou d'un être vivant au niveau des portes d'entrée et de sortie du véhicule 2.

Le procédé de contrôle 500 comprend une étape de transmission en temps réel des données 200 vers une unité de calcul 300, par l'intermédiaire d'un réseau de modules de communication 10a, 10b, 10c, 10d.

Dans un mode de réalisation, les modules de communication 10 assurent le transfert des données 200, collectées à l'intérieur des véhicules 2, à l'unité de calcul 300 et la transmission des consignes 400, générées par l'unité de calcul 300, aux effecteurs 12 situés à l'intérieur des véhicules 2.

Le procédé de contrôle 500 comprend une étape de traitement automatique en temps réel des données 200 issues de l'étape de mesure et/ou d'enregistrement de paramètres physique, d'images et/ou de sons à l'intérieur des véhicules 2 par l'unité de calcul 300.

Dans un mode de réalisation, le traitement des données consiste à appliquer des techniques d'analyse des données appartenant au champ du traitement du signal telles que le filtrage, la compression, la réduction de bruit, la déconvolution, la prédiction, l'indentification, la classification.

Le procédé de contrôle 500 comprend une étape de détection automatique et en temps réel d'un évènement et/ou d'une configuration en lien avec la sécurité et/ou la sureté et/ou le confort des passagers transportés à l'intérieur des véhicules 2.

Dans un mode de réalisation, l'étape de détection consiste en l'analyse en temps réel des données 200 mesurées à l'intérieur des véhicules 2 en mouvement le long de l'installation de transport par câbles 100 par un module de détection intégré dans l'unité de calcul 300.

Dans un mode de réalisation, l'analyse des données 200 est réalisée à partir de modèles de reconnaissance automatique d'image, de sons et la classification de données selon des techniques de l'apprentissage automatique et de l'intelligence artificielle.

Le procédé 500 comprend une étape de génération automatique, en temps réel et adaptative d'une consigne 400 visant à maximiser le niveau de sécurité, la sureté, la bonne utilisation et le confort des passagers transportés dans les véhicules 2 de l'installation de transport par câbles 100.

Dans un mode de réalisation, l'étape de génération automatique de la consigne 400 est réalisée à partir de l'étape de détection d'un évènement et par une analyse des données 200 issues des mesures par les capteurs 9.

Dans un mode de réalisation, la génération de la consigne 400 est réalisée par un module de commande intégré dans l'unité de calcul 300.

Dans un mode de réalisation, la génération de la consigne 400 est réalisée par la résolution d'un problème d'optimisation.

Dans un mode de réalisation, l'optimisation est réalisée à partir d'un apprentissage automatique et/ou à partir de modèles de prédiction basés sur une description de la physique sous-jacente au phénomène considéré.

Dans un mode de réalisation, la génération automatique de la consigne 400 consiste à résoudre un problème d'optimisation, à partir d'un apprentissage automatique et/ou à partir de modèles de prédiction basés sur une description de la physique sous-jacente au phénomène considéré, visant à maximiser le niveau de sécurité, la sureté, la bonne utilisation et le confort des usagers transportés dans les véhicules 2 de l'installation de transport par câbles 100.

Dans un mode de réalisation, la consigne 400 est générée à partir de modèles reposant sur les techniques de l'intelligence artificielle générative.

La figure 12 montre un mode de réalisation de la détection des évènements à l'intérieur des véhicules 2. Le capteur 9 positionné à l'intérieur du véhicule génère une mesure d'une grandeur physique. La grandeur physique peut être un son, une image, une température, un mouvement, une luminosité, une concentration de substance dans l'air, une fumée, une accélération, ou de façon générale, toute quantité physique ayant en lien direct ou indirect avec la sécurité et/ou la sureté et/ou le confort des usagers transportés dans les véhicules. Le signal associé à la grandeur physique des données 200 est transmis par les modules de communication depuis les véhicules 2 vers l'unité de calcul 300 contenant un module de détection 201.

Dans un mode de réalisation, le module de détection 201 exploite les quantités d'intérêts des données 200 à partir de techniques appartenant au domaine de l'intelligence artificielle, afin de détecter les évènements à l'intérieur des véhicules 2.

Le module de détection 201 peut être basé sur une méthode d'apprentissage automatique de type classification. La classification vise à affecter les données 200 à des catégories à partir de l'analyse du signal associé et d'un entraînement des modèles à attribuer une classe à partir d'une donnée d'entrée. Le module de détection 201 basé sur la classification vise à apprendre la relation entre les données d'entrée et les classes à partir d'un modèle basé sur un algorithme, tel que la régression logistique, afin de lui attribuer une classe correspondant à un type d'évènement en lien avec la sécurité, la sureté et/ou le confort pouvant survenir à l'intérieur d'un véhicule 2. L'apprentissage automatique peut par exemple être de type supervisé, non supervisé ou par renforcement.

Le module de détection 201 peut par exemple être basé sur une méthode de type régression. La régression vise à modéliser la relation entre les entrées et sorties afin de prédire une variable sur la base d'une ou plusieurs données d'entrée, comme par exemple une grandeur physique en lien avec la sécurité, la sureté et/ou le confort à l'intérieur des véhicules 2. La variable de sortie peut être de type catégoriel ou continu.

La personne du métier peut choisir le type de modèle d'apprentissage automatique qui est le plus adapté à la détection de l'évènement concerné.

Dans un mode de réalisation, le module de détection 201 est entraîné sur un ensemble de jeux de données d'apprentissage étiquetées.

Pour illustrer un mode d'utilisation du module de détection 201, ce dernier détecte automatiquement la survenue d'un évènement ou d'une situation spécifique à l'intérieur du véhicule 2 à partir des données mesurées en temps réel par les microphones et les caméras positionnées à l'intérieur du véhicule 2, en se formant sur un ensemble de captations sonores et/ou vidéos préalablement enregistrées au cours de l'exploitation de l'installation 100 et/ou fournies sous la forme de données d'apprentissage étiquetées.

Des paramètres de réglage du module de détection 201 peuvent par exemple être renseignés par un utilisateur par l'intermédiaire d'une interface homme-machine afin d'établir un seuil à partir duquel un évènement sera classé dans une catégorie ou dans une autre.

La figure 12 montre un mode de réalisation de l'élaboration de la consigne 400, qui vise à maximiser le niveau de sécurité, la sureté, la bonne utilisation et le confort des passagers transportés dans les véhicules 2 de l'installation de transport par câbles 100, par une action localisée dans le véhicule et/ou sur un dispositif agissant sur le fonctionnement de l'installation de transport par câbles 100. Les informations issues de l'analyse d'un évènement par le module de détection 201 sont ensuite transmises à un module de commande 401, dont le but est d'élaborer en temps réel et de façon adaptative une consigne 400 qui maximise le niveau de sécurité, la sureté, la bonne utilisation et/ou le confort des passagers transportés dans les véhicules 2.

Dans un mode de réalisation, le module de commande 401 exploite :
- Les informations transmises par le module de détection 201 ;
- Les données 200 issues des mesures en temps réels réalisées par les capteurs 9 positionnés à l'intérieur des véhicules 2 ; afin de contrôler de façon adapative et en temps réels les effecteurs situés à l'intérieur des véhicules 2 et/ou les effecteurs agissant sur le fonctionnement de l'installation de transport par câbles, à partir des techniques de l'intelligence artificielle. Les techniques utilisées pour le contrôle peuvent appartenir au champ de l'intelligence artificielle de type prédictive ou générative.

Le module de commande 401 peut être basé sur une méthode de type classification. La classification vise à affecter les données fournies en entrée à des catégories, à partir de l'analyse du signal associé et d'un entraînement des modèles à attribuer une classe à partir d'une donnée d'entrée. Le module de commande 401 basé sur la classification vise à apprendre la relation entre les données d'entrée et les classes à partir d'un modèle basé sur un algorithme, tel que la régression logistique, afin de lui attribuer une classe de consigne adaptée et optimale en réponse à un type d'évènement en lien avec la sécurité, la sureté et/ou le confort pouvant survenir à l'intérieur d'un véhicule 2.

Le module de commande 401 peut par exemple être basé sur une méthode de type régression. La régression vise à modéliser la relation entre les entrées et sorties afin de prédire une variable de sortie sur la base d'une ou plusieurs données d'entrée, comme par exemple une grandeur de consigne adaptée et optimale en réponse à un évènement en lien avec la sécurité, la sureté et/ou le confort à l'intérieur des véhicules 2. La variable de sortie peut être de type catégoriel ou continu.

Le module de commande 401 peut par exemple être basé sur une méthode générative capable de générer du nouveau contenu, sous plusieurs formes, comme du texte, une image, un fichier audio ou du code logiciel, en modélisant les caractéristiques des données tirées des jeux de données qui alimentent le modèle.

La personne du métier peut choisir le type de modèle d'intelligence artificielle qui est le plus adapté à la génération de la consigne en réponse à l'évènement concerné.

Dans un mode de réalisation, le module de commande 401 est entraîné sur un ensemble de jeux de données d'apprentissage étiquetées.

Pour illustrer un mode d'utilisation du module de commande 401, ce dernier élabore automatiquement et de façon adaptative un message visuel ou sonore diffusé en temps réel à l'intérieur du véhicule, en réponse à une situation spécifique détectée à l'intérieur du véhicule et à partir des données mesurées en temps réel par les microphones et les caméras positionnées à l'intérieur du véhicule, en se formant sur un ensemble de données préalablement enregistrées au cours de l'exploitation et/ou fournies sous la forme de données d'apprentissage étiquetées.

Pour illustrer un mode d'utilisation alternatif du module de commande 401, ce dernier contrôle automatiquement et de façon adaptative le fonctionnement de l'installation de transport par câble en temps réel en réponse à une situation spécifique détectée à l'intérieur du véhicule et à partir des données mesurées en temps réel par les microphones et les caméras positionnées à l'intérieur du véhicule, en se formant sur un ensemble de données préalablement enregistrées et/ou fournies sous la forme de données d'apprentissage étiquetées.

Des paramètres de réglage du module de commande 401 peuvent par exemple être renseignés par un utilisateur par l'intermédiaire d'une interface homme-machine afin d'établir un seuil à partir duquel une action sera appliquée ou non, en réponse à l'évènement détecté.

Des exemples de modes de réalisations des modules de détection et de commande de la présente invention ont été décrits afin d'expliciter les principes de réalisations et leur application pratique. De nombreuses adaptations et modifications peuvent être établies dans les méthodes ici décrites et illustrées, sans sortir du cadre de la présente invention, la description et les dessins associés devant être interprétés comme des illustrations non limitatives.

Le procédé de contrôle 500 comprend une étape d'action automatique selon la consigne 400, en temps réel et adaptative à l'évènement détecté, avec le contrôle d'un dispositif 12 agissant de façon à l'intérieur du véhicule 2, et/ou d'un dispositif situé en d'autres points de l'installation 100 et/ou sur d'autres sous-systèmes agissant sur le fonctionnement de l'installation de transport par câbles 100.

La figure 2 montre un mode de réalisation de l'étape d'action automatique, en temps réel et adaptative par des dispositifs agissant à l'intérieur du véhicule 2 selon le procédé 500 de contrôle de l'invention.

Dans un mode de réalisation, la consigne 400 qui est générée à l'issue de la détection d'un évènement, d'une situation et/ou d'une configuration en lien avec la sécurité, la sureté, le confort des passagers transportés à l'intérieur des véhicules 2 en mouvement le long de l'installation de transport par câbles 100, consiste à contrôler la vitesse du câble 1. La vitesse de déplacement du câble peut ainsi être augmentée ou diminuée automatiquement, de façon adaptative et en temps réel, selon une valeur ou une règle spécifique, définie à partir de la consigne 400 générée après l'analyse des données 200, selon le type d'évènement, de situation et/ou de configuration en lien avec la sécurité, la sureté, le confort des passagers transportés à l'intérieur des véhicules 2 en mouvement le long de l'installation de transport par câbles 100.

Dans un mode de réalisation, la consigne 400 qui est générée à l'issue de la détection d'un évènement, d'une situation et/ou d'une configuration en lien avec la sécurité, la sureté, le confort des passagers transportés à l'intérieur des véhicules 2 en mouvement le long de l'installation de transport par câbles 100, consiste à modifier le sens de marche de l'installation de transport 100. Le sens de déplacement des véhicules peut ainsi être modifié automatiquement et en temps réel en cas d'évènement à l'intérieur des véhicules 2 nécessitant un rapatriement rapide en station. L'analyse par l'unité 300 des données 200 permet d'élaborer la consigne 400 de commande du sens de marche optimal vis-à-vis du type d'évènement, de situation et/ou de configuration en lien avec la sécurité, la sureté, le confort des passagers transportés à l'intérieur des véhicules 2 en mouvement le long de l'installation de transport par câbles 100. En particulier, une évaluation du niveau de remplissage des véhicules, de la répartition des passagers le long de l'installation 100 et de la position des stations d'extrémité ou intermédiaire de l'installation 100 sont des paramètres utilisés pour la définition de la consigne.

Dans un mode de réalisation, la consigne 400 qui est générée à l'issue de la détection d'un évènement, d'une situation et/ou d'une configuration en lien avec la sécurité, la sureté, le confort des passagers transportés à l'intérieur des véhicules 2 en mouvement le long de l'installation de transport par câbles 100, consiste à commander le cyclage ou le décyclage des véhicules 2 depuis ou vers les voies d'isolement 30 et/ou de garage 70. L'isolement d'un ou de plusieurs véhicules en circulation sur la ligne de l'installation 100 peut ainsi être contrôlé automatiquement et en temps réel en cas d'évènement à l'intérieur des véhicules 2 qui le nécessiterait, à partir de l'analyse par l'unité 300 des données 200 permettant d'élaborer la consigne 400 de commande de l'action optimale à engager vis-à-vis du type d'évènement, de situation et/ou de configuration en lien avec la sécurité, la sureté, le confort des passagers transportés à l'intérieur des véhicules 2 en mouvement le long de l'installation de transport par câbles 100.

Dans un mode de réalisation, une voie d'isolement 30 des véhicules 2 est située dans au moins une station 50, 60 de l'installation de transport par câbles 100. La voie d'isolement 30 est susceptible d'accueillir au cours du fonctionnement de l'installation 100 au moins un véhicule 2 pour lequel la consigne 400 générée à l'issue de la détection préalable d'un évènement à l'intérieur dudit véhicule consiste à rediriger le véhicule vers ladite voie d'isolement 30. L'isolement du véhicule permet par exemple une intervention des forces de l'ordre, des services de secours ou bien la mise en sécurité du véhicule en attendant une intervention ultérieure. La voie d'isolement peut être une voie de garage 70, de stationnement temporaire ou une quelconque voie spécifique de l'installation de transport par câble 100.

Dans un mode de réalisation, la consigne 400 qui est générée à l'issue de la détection d'un évènement, d'une situation et/ou d'une configuration en lien avec la sécurité, la sureté, le confort des passagers transportés à l'intérieur des véhicules 2 en mouvement le long de l'installation de transport par câbles 100, consiste à adapter la vitesse de déplacement d'un véhicule ou de plusieurs véhicules situés en station au niveau de la zone de quai. L'adaptation de la vitesse d'un ou de plusieurs véhicules en station dans la zone de quai peut ainsi être contrôlée automatiquement et en temps réel en cas d'évènement à l'intérieur des véhicules 2 qui le nécessiterait, tel qu'une surcharge ou un remplissage insuffisant du véhicule, la présence d'un usager à mobilité réduite, le transport d'un objet spécial et/ou encombrant. L'analyse par l'unité 300 des données 200 permet d'élaborer la consigne 400 de vitesse optimale imposée à un ou plusieurs véhicules 2 situés au niveau des quais des stations en fonction du type d'évènement, de situation et/ou de configuration en lien avec la sécurité, la sureté, le confort des passagers transportés à l'intérieur des véhicules 2 en mouvement le long de l'installation de transport par câbles 100.

Dans un mode de réalisation, la consigne 400 qui est générée à l'issue de la détection d'un évènement, d'une situation et/ou d'une configuration en lien avec la sécurité, la sureté, le confort des passagers transportés à l'intérieur des véhicules 2 en mouvement le long de l'installation de transport par câbles 100, consiste à commander l'activation et la désactivation ciblées des sécurités et des surveillances du fonctionnement de l'installation de transport par câbles. Le contrôle de l'état des sécurités et des surveillances de l'installation de transport par câbles en temps réel et de façon automatique, ou semi-automatique avec la validation par un opérateur, assure par exemple en cas d'urgence la possibilité d'évacuer les véhicules vers les stations et cela indépendamment de la présence de certains défauts qui empêcheraient le bon rapatriement des véhicules.

Dans un mode de réalisation, la consigne 400 qui est générée à l'issue de la détection d'un évènement, de situation et/ou de configuration en lien avec la sécurité, la sureté, le confort des passagers transportés à l'intérieur des véhicules 2 en mouvement le long de l'installation de transport par câbles 100, consiste à modifier le type de mode de marche de l'installation de transport par câbles 100. L'analyse par l'unité 300 des données 200 permet d'élaborer la consigne 400 de modification du type de marche, en passant d'un mode nominal à un mode dégradé, de façon adaptative vis-à-vis du type d'évènement, de situation et/ou de configuration en lien avec la sécurité, la sureté, le confort des passagers transportés à l'intérieur des véhicules 2 en mouvement le long de l'installation de transport par câbles 100. Un exemple de marche dégradée consiste à forcer le mouvement du câble pour ramener les véhicules en station et à fermer automatiquement les portes des véhicules dès que le dernier passager est sorti en station afin d'empêcher tout embarquement dans les stations suivantes.

Dans un mode de réalisation, la consigne 400 qui est générée à l'issue de la détection à l'intérieur d'un véhicule 2 d'un évènement, d'une situation et/ou d'une configuration en lien avec la sécurité, la sureté, le confort des passagers transportés à l'intérieur des véhicules 2 en mouvement le long de l'installation de transport par câbles 100, consiste à diffuser des messages visuels et/ou sonores en station dans la zone de quai. La diffusion de messages sur des écrans d'affichage dynamique ou des dispositifs de diffusion sonore, tels que des haut-parleurs ou des douches sonores, peut ainsi être contrôlée automatiquement et en temps réel en cas d'évènement à l'intérieur des véhicules 2 qui le nécessiterait, tel que par exemple une surcharge ou un remplissage insuffisant du véhicule, la présence d'un usager à mobilité réduite, le transport d'un objet spécial et/ou encombrant. L'analyse par l'unité 300 des données 200 permet d'élaborer la consigne 400 de génération de l'information visuelle et/ou sonore de façon adaptative selon le type d'évènement, de situation et/ou de configuration en lien avec la sécurité, la sureté, le confort des passagers transportés à l'intérieur des véhicules 2 en mouvement le long de l'installation de transport par câbles 100.

Dans un mode de réalisation montré par la figure 2, un ensemble de dispositifs de type effecteur agit à l'intérieur du véhicule en temps réel et de façon automatique à l'intérieur du véhicule :
- Un éclairage d'intensité variable 14 diffuse de la lumière artificielle à l'intérieur du véhicule 2 tel que l'intensité lumineuse est réglable ;
- Un haut-parleur 15 émet des sons à l'intérieur du véhicule 2 tels que des messages vocaux ;
- Un bloc de climatisation ou de chauffage 19 refroidit ou réchauffe l'air à l'intérieur du véhicule 2 ;
- Un écran 29 diffuse des informations visuelles à l'intérieur du véhicule 2 ;
- Une ventilation 25 assure la ventilation par convection forcée ou naturelle de l'air à l'intérieur du véhicule 2 ;
- Un dispositif 28 de gestion de l'opacité des parois translucides du véhicule 2 ;
- Un siège 80 relevable ou amovible permet de modifier l'encombrement à l'intérieur du véhicule 2.

Dans un mode de réalisation, l'étape d'action en temps réel à l'intérieur d'un véhicule 2 est réalisée par au moins un des effecteurs positionnés à l'intérieur des véhicules 2, les effecteurs pouvant être un éclairage d'intensité variable 14, un haut-parleur 15, un bloc de climatisation ou de chauffage 19, un interphone 24, un écran 29, une ventilation 25, un dispositif d'opacification 28 des parois vitrées, un siège 80 amovible, un dispositif d'extinction d'incendie, un diffuseur d'odeur.

Les figures 3 à 10 représentent des modes de réalisation des étapes du procédé de contrôle 500 de la sécurité et du confort à l'intérieur d'un véhicule d'une installation de transport de véhicules par câbles.

Dans un mode de réalisation montré par la figure 3, un évènement 51 relatif à la sécurité et à la sureté des passagers et des biens transportés se déclenche dans un des véhicules 2 en déplacement le long de l'installation de transport 100. Dans le mode de réalisation montré par la figure 3, l'évènement qui se déroule à l'intérieur du véhicule est de type :
- Agression verbale 51a ;
- Agression physique 51b ;
- Vol 51c.

Des sons 510 au contenu spécifique, caractéristique des évènements 51 en lien avec la sureté et la sécurité des personnes et des biens, par exemple de type agression, délinquance, bagarre, sont émis à l'intérieur du véhicule et sont enregistrés par au moins un microphone 16 positionné à l'intérieur du véhicule. Des images 511 au contenu spécifique, caractéristique des évènements 51 en lien avec la sureté et la sécurité des personnes et des biens, par exemple de type agression, délinquance, bagarre, sont captées par au moins une caméra 17. Un détecteur de mouvement 18 positionné à l'intérieur du véhicule permet de détecter un mouvement à l'intérieur du véhicule. Au moins une balise GPS embarquée 13 repère et suit en temps réel l'évolution de la position du véhicule concerné par la survenue de l'évènement 51. Les données 200 mesurées en temps réels par les capteurs 13, 16, 17, 18 sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 51 et appliquées par les effecteurs positionnés à l'intérieur du véhicule 2, ainsi que des dispositifs disposés en d'autres points de l'installation de transport par câble et agissant sur son fonctionnement. Dans le mode de réalisation montré par la figure 3, les effecteurs 14, 15, 28, 29 situés à l'intérieur du véhicule concerné par la survenue de l'évènement 51 sont activés de façon simultanée et/ou différenciée par les consignes 400.

Selon l'analyse de l'évènement réalisée par l'unité 300 et la nature des consignes 400 émises en conséquence, un éclairage 14a avec une intensité et/ou une coloration et/ou un filtrage et/ou une variation au cours du temps avec un effet flash est émis par au moins un dispositif d'éclairage 14 situé à l'intérieur du véhicule 2 concerné par la survenue de l'évènement 51. Selon un mode de réalisation, la commande de l'éclairage est générée automatiquement à partir de l'unité de calcul 300 par un modèle de type intelligence artificielle générative, de façon adaptative à la nature et circonstances de l'évènement 51 qui a été préalablement détecté automatiquement. La commande de l'éclairage peut par exemple susciter une alerte chez l'agresseur. Selon un mode de réalisation alternatif, la commande de l'éclairage est générée à distance par un opérateur de contrôle. Selon un mode de réalisation alternatif, la commande de l'éclairage est pré-enregistrée et émise de façon adaptative à la nature et circonstances de l'évènement 51 qui a été préalablement détecté automatiquement.

Selon l'analyse de l'évènement réalisée par l'unité 300 et la nature des consignes 400 émises en conséquence, un message 15a est diffusé par au moins un haut-parleur 15 situé à l'intérieur du véhicule 2 concerné par la survenue de l'évènement 51. Selon un mode de réalisation, le contenu du message est généré automatiquement à partir de l'unité de calcul 300 par un modèle de type intelligence artificielle générative, de façon adaptative à la nature et circonstances de l'évènement 51 qui a été préalablement détecté automatiquement. Le message diffusé par le haut-parleur permet par exemple d'informer l'agresseur qu'il a été repéré et que des caméras enregistrent ses actes afin de le dissuader. Selon un mode de réalisation alternatif, le contenu du message est généré par un opérateur de contrôle. Selon un mode de réalisation alternatif, le contenu du message est pré-enregistré et diffusé de façon adaptative à la nature et circonstances de l'évènement 51 qui a été préalablement détecté automatiquement.

Selon l'analyse de l'évènement réalisée par l'unité 300 et la nature des consignes 400 émises en conséquence, un dispositif d'opacification agit sur la transparence des parois vitrées 28 du véhicule 2 concerné par la survenue de l'évènement 51. Selon un mode de réalisation, le niveau d'opacification est généré automatiquement à partir de l'unité de calcul 300 par un modèle de type intelligence artificielle générative, de façon adaptative à la nature et circonstances de l'évènement 51 qui a été préalablement détecté automatiquement.

Selon l'analyse de l'évènement réalisée par l'unité 300 et la nature des consignes 400 émises en conséquence, un message visuel 29a est affiché par au moins un écran 29 situé à l'intérieur du véhicule 2 concerné par la survenue de l'évènement 51. Selon un mode de réalisation, le contenu du message visuel est généré automatiquement à partir de l'unité de calcul 300 par un modèle de type intelligence artificielle générative, de façon adaptative à la nature et circonstances de l'évènement 51 qui a été préalablement détecté automatiquement. Le message visuel peut par exemple être une alerte à destination d'un agresseur afin de le dissuader de poursuivre ses actes. Selon un mode de réalisation alternatif, le contenu du message visuel est généré à distance par un opérateur de contrôle. Selon un mode de réalisation alternatif, le contenu du message visuel est pré-enregistré et diffusé de façon adaptative à la nature et circonstances de l'évènement 51 qui a été préalablement détecté automatiquement. Selon un mode de réalisation, le message visuel est un renvoi de l'enregistrement en temps réel d'au moins une caméra 17 située à l'intérieur du véhicule.

Des dispositifs sont susceptibles d'être activés en dehors du véhicule par les consignes 400 afin d'agir directement ou indirectement sur le véhicule 2.

Selon l'analyse de l'évènement réalisée par l'unité 300 et la nature des consignes 400 émises en conséquence, une alerte spécifique ciblée est émise au poste de contrôle et de commande 27, avec une information envoyée à l'interface homme-machine pour identifier le véhicule concerné par la survenue de l'évènement 51 et ainsi permettre, le cas échéant, à l'opérateur en poste d'établir une communication par l'intermédiaire de l'interphonie 24 et/ou de prévenir les forces de l'ordre ou toute autorité compétente pour la prise en charge de l'évènement.

Selon l'analyse de l'évènement réalisée par l'unité 300 et la nature des consignes 400 émises en conséquence, les actions suivantes sont susceptibles d'être engagées au niveau du fonctionnement de l'installation de transport par câbles, avec :
- La modification de la vitesse de déplacement du câble en temps réel et de façon adaptative afin d'accélérer le rapatriement du véhicule 2 vers une station ou stopper son déplacement ;
- La modification du sens de déplacement du câble en temps réel et de façon adaptative afin de rapatrier rapidement le véhicule 2 vers la station la plus proche ;
- La direction du véhicule 2 en temps réel et de façon adaptative vers une voie d'isolement dans une quelconque station de l'installation afin de permettre une intervention dédiée.

Dans un mode de réalisation, les évènements 51 en lien avec la sureté des passagers et des biens transportés sont analysés sur la base des données 200 collectées par l'unité de calcul 300 afin d'extraire des indicateurs et établir un suivi des évènements rencontrés au cours de l'exploitation. L'analyse des données et leur traitement réalisé par l'unité de calcul peut ensuite être couplé avec un outil d'aide à la décision tel qu'un logiciel de gestion de maintenance assistée par ordinateur, un registre d'exploitation, un rapport annuel en lien avec la sécurité et l'exploitation, ou de façon générale avec tout support de communication de données utilisé par les parties prenantes du système de transport. L'analyse automatisée des évènements en lien avec la dégradation des véhicules peut ainsi guider des dispositions spécifiques et adaptées de sécurité vis-à-vis des évènements rencontrés, telle qu'une surveillance accrue avec une mobilisation de personnel dédié.

Dans un mode de réalisation montré par la figure 4, c'est un évènement 52 relatif à la dégradation volontaire de matériel et en lien avec l'intégrité du matériel du véhicule 2 qui se déclenche dans un des véhicules 2 de l'installation de transport 100. Des sons 520 au contenu spécifique, caractéristique des évènements 52 en lien avec la dégradation volontaire du matériel, tels que l'usage d'une bombe de peinture ou des gravures, sont émis à l'intérieur du véhicule et sont enregistrés par au moins un microphone 16 positionné à l'intérieur du véhicule. Des images 521 au contenu spécifique, caractéristique des évènements 52 en lien avec la dégradation volontaire à l'intérieur du véhicule sont captées par au moins une caméra 17. Un détecteur de mouvement 18 positionné à l'intérieur du véhicule permet de détecter les mouvements à l'intérieur des véhicules. Au moins une balise GPS embarquée 13 repère la position du véhicule concerné par la survenue de l'évènement 52 et suit son évolution en temps réel. Les données 200 mesurées en temps réels par les capteurs 13, 16, 17, 18 sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 52 et appliquées par les effecteurs positionnés à l'intérieur du véhicule, ainsi que des dispositifs disposés en d'autres points de l'installation de transport par câble 100 et agissant sur son fonctionnement. Dans le mode de réalisation montré par la figure 4, les effecteurs 14, 15, 28, 29 situés à l'intérieur du véhicule concerné par la survenue de l'évènement 52 sont activés de façon simultanée et/ou différenciée par les consignes 400, selon les mêmes modalités que précédemment pour l'évènement 52.

La figure 4 représente des capteurs et des effecteurs déjà utilisés sur la figure 3 pour illustrer le mode de réalisation concernant les évènements 51. Par soucis d'allègement de la description des figures, la description des modes d'activation des effecteurs selon les consignes ne sont pas reprises ici pour les évènements 52 mais sont applicables de la même façon que pour les évènements 51.

Dans un mode de réalisation, les évènements 52 en lien avec la dégradation volontaire de matériel et l'intégrité du matériel du véhicule 2 sont analysés sur la base des données 200 collectées par l'unité de calcul 300 afin d'extraire des indicateurs et établir un suivi des évènements rencontrés au cours de l'exploitation. L'analyse des données et leur traitement réalisé par l'unité de calcul peut ensuite être couplé avec un outil d'aide à la décision tel qu'un logiciel de gestion de maintenance assistée par ordinateur, un registre d'exploitation, un rapport annuel en lien avec la sécurité et l'exploitation, ou de façon générale avec tout support de communication de données utilisé par les parties prenantes du système de transport. L'analyse automatisée des évènements en lien avec la dégradation des véhicules peut ainsi guider une maintenance préventive et/ou curative ciblée, adaptée et optimisée des véhicules selon leur état en temps réel.

Dans un mode de réalisation montré par la figure 5, un évènement 53 relatif à la sécurité incendie se déclenche dans un des véhicules 2 en déplacement le long de l'installation de transport 100. Dans le mode de réalisation montré par la figure 5, l'évènement qui se déroule à l'intérieur du véhicule est de type :
- Utilisation d'élément avec du feu 53a tel qu'une cigarette ;
- Le déclenchement d'un incendie 53b d'un composant du véhicule 2 ;
- Le déclenchement d'un incendie de batterie 53c transportée à l'intérieur du véhicule 2 ;
- La manipulation de gaz 53d.

Des sons 530 au contenu spécifique, caractéristique des évènements 53 en lien avec la sécurité incendie, sont susceptibles d'être émis à l'intérieur du véhicule et sont enregistrés par au moins un microphone 16 positionné à l'intérieur du véhicule. Des images 531 au contenu spécifique, caractéristique des évènements 53 en lien avec la sécurité incendie, sont captées par au moins une caméra 17 positionnée à l'intérieur du véhicule. Des émanations de type fumée et des gaz contenus dans l'air intérieur du véhicule 532, émis par l'évènement 53, sont détectés et mesurés par au moins un capteur 20, 21. Un flux thermique 533 émis par l'évènement 53 est détecté par au moins une caméra thermique 31. Au moins une balise GPS embarquée 13 repère et suit en temps réel la position du véhicule concerné par la survenue de l'évènement 53. La température de l'air à l'intérieur du véhicule 2 est mesurée en temps réel par un thermomètre 23. Les données 200 mesurées en temps réel par les capteurs 13, 16, 17, 20, 21, 22, 23 sont émises depuis le véhicule 2 et transmises en temps réel par l'intermédiaire du module de communication 10d vers l'unité 300 d'analyse des données.

Un ensemble de consignes sont transmises en temps réel par l'unité 300 vers le véhicule 2 concerné par la survenue de l'évènement 53 et sont appliquées par les effecteurs positionnés à l'intérieur du véhicule, ainsi que des dispositifs disposés en d'autres points de l'installation de transport par câble 100 et agissant sur son fonctionnement. Dans le mode de réalisation montré par la figure 3, les effecteurs 14, 15, 25, 29 situés à l'intérieur du véhicule 2 concerné par la survenue de l'évènement 53 sont activés de façon simultanée et/ou différenciée par les consignes 400.

Dans un mode non représenté sur la figure 5, un dispositif d'extinction incendie, de type extincteur ou système d'extinction automatique à eau, est positionné à l'intérieur des véhicules 2 et est activé par les consignes 400, selon les caractéristiques et circonstances spécifiques de l'évènement 53.

Selon l'analyse de l'évènement réalisée par l'unité 300 et la nature des consignes 400 émises en conséquence, un éclairage 14a avec une intensité et/ou une coloration et/ou un filtrage et/ou une variation au cours du temps avec un effet flash est émis par au moins un dispositif d'éclairage 14 situé à l'intérieur du véhicule 2 concerné par la survenue de l'évènement 53 afin de susciter une alerte à destination des usagers transportés. Selon un mode de réalisation, la commande de l'éclairage est générée automatiquement à partir de l'unité de calcul 300 par un modèle de type intelligence artificielle générative, de façon adaptative à la nature et circonstances de l'évènement 53 qui a été préalablement détecté automatiquement. Selon un mode de réalisation alternatif, la commande de l'éclairage est générée à distance par un opérateur de contrôle. Selon un mode de réalisation alternatif, la commande de l'éclairage est pré-enregistrée et émise de façon adaptative à la nature et circonstances de l'évènement 53 qui a été préalablement détecté automatiquement.

Selon l'analyse de l'évènement réalisée par l'unité 300 et la nature des consignes 400 émises en conséquence, un message 15a est diffusé par au moins un haut-parleur 15 situé à l'intérieur du véhicule 2 concerné par la survenue de l'évènement 53 afin d'alerter, d'informer et de fournir des consignes de sécurité aux usagers transportés à l'intérieur du véhicule. Selon un mode de réalisation, le contenu du message est généré automatiquement à partir de l'unité de calcul 300 par un modèle de type intelligence artificielle générative, de façon adaptative à la nature et circonstances de l'évènement 53 qui a été préalablement détecté automatiquement. Selon un mode de réalisation alternatif, le contenu du message est généré à distance par un opérateur de contrôle. Selon un mode de réalisation alternatif, le contenu du message est pré-enregistré et diffusé de façon adaptative à la nature et circonstances de l'évènement 53 qui a été préalablement détecté automatiquement.

Selon l'analyse de l'évènement réalisée par l'unité 300 et la nature des consignes 400 émises en conséquence, un dispositif d'opacification agit sur la transparence des parois vitrées 28 du véhicule 2 concerné par la survenue de l'évènement 53. Selon un mode de réalisation, le niveau d'opacification est généré automatiquement à partir de l'unité de calcul 300 par un modèle de type intelligence artificielle générative, de façon adaptative à la nature et circonstances de l'évènement 53 qui a été préalablement détecté automatiquement.

Selon l'analyse de l'évènement réalisée par l'unité 300 et la nature des consignes 400 émises en conséquence, un message visuel 29a est affiché par au moins un écran 29 situé à l'intérieur du véhicule 2 concerné par la survenue de l'évènement 53 afin d'alerter, d'informer et de fournir des consignes de sécurité aux usagers transportés à l'intérieur du véhicule. Selon un mode de réalisation, le contenu du message visuel est généré automatiquement à partir de l'unité de calcul 300 par un modèle de type intelligence artificielle générative, de façon adaptative à la nature et circonstances de l'évènement 53 qui a été préalablement détecté automatiquement. Selon un mode de réalisation alternatif, le contenu du message visuel est généré à distance par un opérateur de contrôle. Selon un mode de réalisation alternatif, le contenu du message visuel est pré-enregistré et diffusé de façon adaptative à la nature et circonstances de l'évènement 53 qui a été préalablement détecté automatiquement.

Selon l'analyse de l'évènement réalisée par l'unité 300 et la nature des consignes 400 émises en conséquence, une ventilation forcée 25a est créée par un dispositif de ventilation 25 à l'intérieur du véhicule 2 concerné par la survenue de l'évènement 53 afin d'évacuer les fumées et les gaz contenus à l'intérieur du véhicule. Selon un mode de réalisation, l'activation de la ventilation est commandée automatiquement à partir de l'unité de calcul 300 de façon adaptative à la nature et circonstances de l'évènement 53 qui a été préalablement détecté automatiquement.

Des dispositifs sont susceptibles d'être activés en dehors du véhicule par les consignes 400 afin d'agir directement ou indirectement sur le véhicule 2 concerné par la survenue de l'évènement 53 en lien avec la sécurité incendie.

Selon l'analyse de l'évènement réalisée par l'unité 300 et la nature des consignes 400 émises en conséquence, une alerte spécifique ciblée en lien avec la sécurité incendie est émise au poste de contrôle et de commande 27, avec une information envoyée à l'interface homme-machine pour :
- Identifier le véhicule concerné par la survenue de l'évènement 53 ;
- Permettre, le cas échéant, à l'opérateur en poste d'établir une communication par l'intermédiaire de l'interphonie 24 afin d'émettre des consignes de protection vis-à-vis de la sécurité incendie ;
- Prévenir, le cas échéant, les pompiers ou toute autorité compétente pour la prise en charge de l'évènement.

Selon l'analyse de l'évènement réalisée par l'unité 300 et la nature des consignes 400 émises en conséquence, les actions suivantes sont susceptibles d'être engagées au niveau du fonctionnement de l'installation de transport par câbles 100, avec :
- Une activation automatique en temps réel du mode de marche incendie ;
- L'activation et/ou l'activation ciblée, en temps réel et de façon adaptative, de sécurités du fonctionnement de l'installation de transport ;
- La modification de la vitesse de déplacement du câble en temps réel et de façon adaptative afin d'accélérer le rapatriement du véhicule 2 vers une station ;
- La modification du sens de déplacement du câble en temps réel et de façon adaptative afin de rapatrier rapidement le véhicule 2 vers la station la plus proche ;
- La direction du véhicule 2 en temps réel et de façon adaptative vers une voie d'isolement dans une quelconque station de l'installation afin de permettre une intervention dédiée.

Dans un mode de réalisation, les évènements 53 en lien avec la sécurité incendie sont analysés sur la base des données 200 collectées par l'unité de calcul 300 afin de commander des systèmes annexes à l'installation de transport tels que l'ouverture automatique des portillons afin de libérer et favoriser l'évacuation des usagers en dehors des stations en cas d'incendie détecté dans un véhicule.

Dans un mode de réalisation montré par la figure 6, un évènement 54 relatif à la bonne utilisation d'un véhicule 2 se déclenche dans un véhicule en déplacement le long de l'installation de transport 100. Dans le mode de réalisation montré par la figure 6, l'évènement qui se déroule à l'intérieur du véhicule est de type :
- Introduction d'un élément non autorisé 54a à l'intérieur du véhicule, tel qu'un vélo, une trottinette, selon le règlement d'exploitation appliqué sur l'installation ;
- La présence d'usagers en surnombre ou une surcharge 54b du véhicule ;
- L'appui 54c d'un usager contre les parois du véhicule ;
- Un mouvement 54d des usagers à l'origine d'un balancement du véhicule ;
- Un usager qui se penche 54e à l'extérieur du véhicule ;
- L'utilisation d'une cigarette ou d'une cigarette électronique 54f ;
- Un bagage oublié 54g ;
- L'introduction d'un animal non autorisé 54h ;
- Un passager oublié ou égaré 54g dans un véhicule au cours de la fermeture de l'installation de transport.

Des sons 540 au contenu spécifique, caractéristique des évènements 54 en lien avec la bonne utilisation du véhicule sont susceptibles d'être émis à l'intérieur du véhicule et sont enregistrés par au moins un microphone 16 positionné à l'intérieur du véhicule. Des images 541 au contenu spécifique, caractéristique des évènements 54 en lien avec la bonne utilisation du véhicule sont captées par au moins une caméra 17 positionnée à l'intérieur du véhicule. Des émanations de type fumée, contenues dans l'air intérieur du véhicule 532, et émis par l'utilisation d'une cigarette 54f sont détectées et mesurées par au moins un capteur 20, 21. Au moins une balise GPS embarquée 13 repère et suit son évolution en temps réel la position du véhicule concerné par la survenue de l'évènement 54. Les données 200 mesurées en temps réels par les capteurs 13, 16, 17, 18, 20, 21, 26 sont émises depuis le véhicule 2 et transmises en temps réel par l'intermédiaire du module de communication 10d vers l'unité 300 d'analyse des données.

Un ensemble de consignes 400 sont transmises en temps réel par l'unité 300 vers le véhicule 2 concerné par la survenue de l'évènement 54 et appliquées par les effecteurs positionnés à l'intérieur du véhicule, ainsi que des dispositifs disposés en d'autres points de l'installation de transport par câble et agissant sur son fonctionnement. Dans le mode de réalisation montré par la figure 6, les effecteurs 14, 15, 24, 28, 29 situés à l'intérieur du véhicule concerné par la survenue de l'évènement 54 sont activés de façon simultanée et/ou différenciée par les consignes 400.

Selon l'analyse de l'évènement réalisée par l'unité 300 et la nature des consignes 400 émises en conséquence, un éclairage 14a avec une intensité et/ou une coloration et/ou un filtrage et/ou une variation au cours du temps avec un effet flash est émis par au moins un dispositif d'éclairage 14 situé à l'intérieur du véhicule 2 concerné par la survenue de l'évènement 54 afin de susciter une alerte à destination des usagers transportés. Selon un mode de réalisation, la commande de l'éclairage est générée automatiquement à partir de l'unité de calcul 300 par un modèle de type intelligence artificielle générative, de façon adaptative à la nature et circonstances de l'évènement 54 qui a été préalablement détecté automatiquement. Selon un mode de réalisation alternatif, la commande de l'éclairage est générée à distance par un opérateur de contrôle. Selon un mode de réalisation alternatif, la commande de l'éclairage est pré-enregistrée et émise de façon adaptative à la nature et circonstances de l'évènement 54 qui a été préalablement détecté automatiquement.

Selon l'analyse de l'évènement réalisée par l'unité 300 et la nature des consignes 400 émises en conséquence, un message 15a est diffusé par au moins un haut-parleur 15, situé à l'intérieur du véhicule 2 concerné par la survenue de l'évènement 54, afin d'alerter, d'informer et de fournir des consignes pour la bonne utilisation du véhicule à destination des usagers transportés à l'intérieur du véhicule. Selon un mode de réalisation, le contenu du message est généré automatiquement à partir de l'unité de calcul 300 par un modèle de type intelligence artificielle générative, de façon adaptative à la nature et circonstances de l'évènement 54 qui a été préalablement détecté automatiquement. Selon un mode de réalisation alternatif, le contenu du message est généré à distance par un opérateur de contrôle. Selon un mode de réalisation alternatif, le contenu du message est pré-enregistré et diffusé de façon adaptative à la nature et circonstances de l'évènement 54 qui a été préalablement détecté automatiquement.

Selon l'analyse de l'évènement réalisée par l'unité 300 et la nature des consignes 400 émises en conséquence, un dispositif d'opacification agit sur la transparence des parois vitrées 28 du véhicule 2 concerné par la survenue de l'évènement 54, afin susciter une alerte perceptible chez les usagers transportés. Selon un mode de réalisation, le niveau d'opacification est généré automatiquement à partir de l'unité de calcul 300 par un modèle de type intelligence artificielle générative, de façon adaptative à la nature et circonstances de l'évènement 54 qui a été préalablement détecté automatiquement.

Selon l'analyse de l'évènement réalisée par l'unité 300 et la nature des consignes 400 émises en conséquence, un message visuel 29a est affiché par au moins un écran 29 situé à l'intérieur du véhicule 2 concerné par la survenue de l'évènement 54 afin d'alerter, d'informer et de fournir des consignes pour la bonne utilisation du véhicule à destination des usagers transportés à l'intérieur du véhicule. Selon un mode de réalisation, le contenu du message visuel est généré automatiquement à partir de l'unité de calcul 300 par un modèle de type intelligence artificielle générative, de façon adaptative à la nature et circonstances de l'évènement 54 qui a préalablement été détecté automatiquement. Selon un mode de réalisation alternatif, le contenu du message visuel est généré à distance par un opérateur de contrôle. Selon un mode de réalisation alternatif, le contenu du message visuel est pré-enregistré et diffusé de façon adaptative à la nature et circonstances de l'évènement 54 qui a été préalablement détecté automatiquement.

Des dispositifs sont susceptibles d'être activés en dehors du véhicule par les consignes 400 afin d'agir directement ou indirectement sur le véhicule 2 concerné par la survenue de l'évènement 54 en lien avec la bonne utilisation des véhicules.

Selon l'analyse de l'évènement réalisée par l'unité 300 et la nature des consignes 400 émises en conséquence, une alerte spécifique ciblée en lien avec une mauvaise utilisation des véhicules est émise au poste de contrôle et de commande 27, avec une information envoyée à l'interface homme-machine pour identifier le véhicule concerné par la survenue de l'évènement 54 et ainsi permettre, le cas échéant, à l'opérateur en poste d'établir une communication par l'intermédiaire de l'interphonie 24 afin d'émettre des consignes spécifiques et/ou de prévenir toute personne compétente pour la prise en charge de l'évènement constaté.

Selon l'analyse de l'évènement réalisée par l'unité 300 et la nature des consignes 400 émises en conséquence, les actions suivantes sont susceptibles d'être engagées au niveau du fonctionnement de l'installation de transport par câbles, avec :
- La modification de la vitesse de déplacement du câble en temps réel et de façon adaptative afin d'accélérer le rapatriement du véhicule 2 vers une station ;
- La modification du sens de déplacement du câble en temps réel et de façon adaptative afin de rapatrier rapidement le véhicule 2 vers la station la plus proche ;
- La direction du véhicule 2 en temps réel et de façon adaptative vers une voie d'isolement dans une quelconque station de l'installation afin de permettre une intervention dédiée ;
- Un affichage visuel et/ou sonore dédié par un dispositif spécifique, non représenté, situé au niveau du quai de la station où est situé le véhicule 2 ;
- La modification de la vitesse de déplacement du véhicule 2 en temps réel et de façon adaptative au niveau du quai de la station où est situé le véhicule ;
- La fermeture ou l'ouverture automatique des portes du véhicule 2 de façon adaptative au niveau du quai de la station où est situé le véhicule.

Dans un mode de réalisation, si un risque de surcharge du véhicule est détecté à l'intérieur du véhicule lors de la phase d'embarquement des usagers, les portes dudit véhicule peuvent être fermées et la vitesse de déplacement à quai augmentée jusqu'à la sortie de la station.

Dans un mode de réalisation, une évaluation du nombre de personnes qui s'apprêtent à sortir du véhicule est réalisée par un ensemble de capteurs à l'intérieur du véhicule 2 et permet de moduler la vitesse de déplacement du véhicule au niveau du quai de débarquement afin d'assurer une phase de débarquement en toute sécurité en station.

Dans un mode de réalisation, un remplissage insuffisant du véhicule au cours de la phase d'embarquement dans une station est détecté. Un message visuel et/ou sonore est alors diffusé en temps réel au niveau des quais pour signaler la présence de places libres dans le véhicule concerné et la vitesse de déplacement du véhicule au niveau du quai est diminuée afin de permettre la poursuite de la phase d'embarquement.

Dans un mode de réalisation, les évènements 54 en lien avec la bonne utilisation des véhicules sont analysés sur la base des données 200 collectées par l'unité de calcul 300 afin d'extraire des indicateurs et établir un suivi des évènements rencontrés. L'analyse des données et leur traitement réalisé par l'unité de calcul peut ensuite être couplé avec un outil d'aide à la décision tel qu'un logiciel de gestion de maintenance assistée par ordinateur, un registre d'exploitation, un rapport annuel en lien avec la sécurité et l'exploitation, ou de façon générale avec tout support de communication de données utilisé par les parties prenantes du système de transport. L'analyse automatisée des évènements rencontrés au cours de l'exploitation permet ainsi d'établir automatiquement des indicateurs de suivi de la fréquentation et de la disponibilité de l'installation. Ainsi, l'unité de calcul peut générer automatiquement un historique des causes d'arrêt ou de ralentissement du système, avec une distinction des types d'arrêt selon que sa cause provienne du système lui-même ou d'une mauvaise utilisation des véhicules par les passagers.

Dans un mode de réalisation, l'unité de calcul 300 analyse les données 200 pour en extraire des indicateurs et établir un suivi des évènements rencontrés, avec un couplage avec un outil d'aide à la décision tel qu'un logiciel de gestion de maintenance, un registre d'exploitation, un rapport de sécurité et d'exploitation ou tout support de communication de données.

Dans un mode de réalisation montré par la figure 7, un évènement 55 relatif à des incivilités des usagers transportés se déclenche à l'intérieur d'un véhicule 2 en déplacement le long de l'installation de transport 100. Dans le mode de réalisation montré par la figure 7, l'évènement qui se déroule à l'intérieur du véhicule est de type :
- Un abandon 55a ou jet de déchet 55b au sol à l'intérieur du véhicule ;
- Des nuisances sonores 55c générées par un ou plusieurs usagers à l'intérieur du véhicule telles que des discussions bruyantes ;
- Un usage inapproprié 55d de l'espace intérieur du véhicule ;
- Un jet d'objet 55e à l'extérieur du véhicule ;
- Une tentative d'ouverture des portes 55f.

Des sons 550 au contenu spécifique, caractéristique des évènements 55 en lien avec des incivilités des usagers transportés à l'intérieur du véhicule, sont susceptibles d'être émis à l'intérieur du véhicule et sont enregistrés par au moins un microphone 16 positionné à l'intérieur du véhicule. Des images 551 au contenu spécifique, caractéristique des évènements 55 en lien avec des incivilités des usagers transportés à l'intérieur du véhicule, sont captées par au moins une caméra 17 positionnée à l'intérieur du véhicule. Des émanations de type fumée contenu dans l'air intérieur du véhicule 552 sont détectés et mesurés par au moins un capteur 20, 21. Au moins une balise GPS embarquée 13 repère et suit l'évolution en temps réel de la position du véhicule concerné par la survenue de l'évènement 55. Les données 200 mesurées en temps réels par les capteurs 13, 16, 17, 18, 20, 21, 26 sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 55 et appliquées par les effecteurs positionnés à l'intérieur du véhicule, ainsi que des dispositifs disposés en d'autres points de l'installation de transport par câble et agissant sur son fonctionnement. Dans le mode de réalisation montré par la figure 7, les effecteurs 14, 15, 19, 24, 28, 29 situés à l'intérieur du véhicule concerné par la survenue de l'évènement 55 sont activés de façon simultanée et/ou différenciée par les consignes 400.

Dans un mode de réalisation, une alerte est envoyée à l'interface homme-machine en cas de présence de passagers au comportement suspect ou inadapté qui ont embarqué à l'intérieur d'un véhicule. Selon une hiérarchisation du niveau de gravité, le véhicule concerné peut par exemple être isolé vers une voie dédiée de la station d'embarquement desdits passagers indélicats.

La figure 7 représente des capteurs et des effecteurs déjà utilisés sur la figure 6 pour illustrer le mode de réalisation concernant les évènements 54. Par souci d'allègement de la description des figures, la description des modes d'activation des effecteurs selon les consignes ne sont pas reprises ici pour les évènements 55 mais sont applicables de la même façon que pour les évènements 54.

Dans un mode de réalisation montré par la figure 8, un évènement 56 relatif au transport d'objets spéciaux se déclenche à l'intérieur d'un véhicule 2 en déplacement le long de l'installation de transport 100. Dans le mode de réalisation montré par la figure 8, l'évènement qui se déroule à l'intérieur du véhicule est de type :
- Transport d'un vélo 56a ;
- Transport d'un objet encombrant 56b ;
- Transport d'une poussette 56c ;
- Transport de fauteuil pour personne à mobilité réduite 56d ;
- Transport de bagages 56e ;
- Transport de trottinette 56f.

Des sons 560 au contenu spécifique, caractéristique des évènements 56 en lien avec un transport d'objets spéciaux à l'intérieur du véhicule, sont susceptibles d'être émis à l'intérieur du véhicule et sont enregistrés par au moins un microphone 16 positionné à l'intérieur du véhicule. Des images 561 au contenu spécifique, caractéristique des évènements 56 en lien avec le transport d'objets spéciaux à l'intérieur du véhicule sont captées par au moins une caméra 17 positionnée à l'intérieur du véhicule. Au moins une balise GPS embarquée 13 repère la position du véhicule concerné par la survenue de l'évènement 56 et de son évolution en temps réel. Les données 200 mesurées en temps réels par les capteurs 13, 16, 17, 18, 20, 21, 26 sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 56 et appliquées par les effecteurs positionnés à l'intérieur du véhicule, ainsi que des dispositifs disposés en d'autres points de l'installation de transport par câble et agissant sur son fonctionnement. Dans le mode de réalisation montré par la figure 8, les effecteurs 14, 15, 24, 29 situés à l'intérieur du véhicule concerné par la survenue de l'évènement 56 sont activés de façon simultanée et/ou différenciée par les consignes 400.

La figure 8 représente des capteurs et des effecteurs déjà utilisés sur la figure 7 pour illustrer le mode de réalisation concernant les évènements 55. Par soucis d'allègement de la description des figures, la description des modes d'activation des effecteurs selon les consignes ne sont pas toutes reprises ici pour les évènements 56 mais sont applicables de la même façon que pour les évènements 55.

Selon l'analyse de l'évènement 56 réalisée par l'unité 300 et la nature des consignes 400 émises en conséquence, les actions suivantes sont susceptibles d'être engagées au niveau du fonctionnement de l'installation de transport par câbles 100, avec :
- Un affichage visuel et/ou sonore dédié par un dispositif spécifique, non représenté, situé au niveau du quai de la station où est situé le véhicule afin d'informer les usagers vis-à-vis du transport d'objet spécial ;
- La modification de la vitesse de déplacement du véhicule au niveau du quai de la station où est situé le véhicule, en temps réel et de façon adaptative au transport d'un objet spécial.

Dans un mode de réalisation montré par la figure 9, un évènement 57 relatif à un transport spécifique, ou impliquant des contraintes spécifiques, se déclenche à l'intérieur d'un véhicule 2 en déplacement le long de l'installation de transport 100. Dans le mode de réalisation montré par la figure 9, l'évènement qui se déroule à l'intérieur du véhicule est de type :
- Transport d'un animal 57a ;
- Transport d'un usager mal voyant 57b ;
- Transport d'un usager à mobilité réduite 57c ;
- Transport d'usagers fragiles 57d tel qu'une personne âgée ou en bas âge ;
- Transport d'usager en fauteuil roulant 57e ;
- Transport d'un usager mal entendant 57f.

Des sons 570 au contenu spécifique, caractéristique des évènements 57 en lien avec un transport spécifique à l'intérieur du véhicule, sont susceptibles d'être émis à l'intérieur du véhicule et sont enregistrés par au moins un microphone 16 positionné à l'intérieur du véhicule. Des images 571 au contenu spécifique, caractéristique des évènements 57 en lien avec un transport spécifique à l'intérieur du véhicule sont captées par au moins une caméra 17 positionnée à l'intérieur du véhicule. Au moins une balise GPS embarquée 13 repère et suit l'évolution en temps réel de la position du véhicule concerné par la survenue de l'évènement 57. Les données 200 mesurées en temps réels par les capteurs 13, 16, 17, 18, 26 sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 57 et appliquées par les effecteurs positionnés à l'intérieur du véhicule, ainsi que des dispositifs disposés en d'autres points de l'installation de transport par câble et agissant sur son fonctionnement. Dans le mode de réalisation montré par la figure 9, les effecteurs 14, 15, 19, 24, 28, 29 situés à l'intérieur du véhicule concerné par la survenue de l'évènement 57 sont activés de façon simultanée et/ou différenciée par les consignes 400.

Selon l'analyse de l'évènement réalisée par l'unité 300 et la nature des consignes 400 émises en conséquence, un éclairage 14a avec une intensité et/ou une coloration et/ou un filtrage et/ou une variation au cours du temps est émis par au moins un dispositif d'éclairage 14, situé à l'intérieur du véhicule 2 concerné par la survenue de l'évènement 57, afin de s'adapter aux besoins spécifiques des usagers transportés. Selon un mode de réalisation, la commande de l'éclairage est générée automatiquement à partir de l'unité de calcul 300, par un modèle de type intelligence artificielle générative, de façon adaptative à la nature et circonstances de l'évènement 57 qui a été préalablement détecté automatiquement. Selon un mode de réalisation alternatif, la commande de l'éclairage est générée à distance par un opérateur de contrôle. Selon un mode de réalisation alternatif, la commande de l'éclairage est pré-enregistrée et émise de façon adaptative à la nature et aux circonstances de l'évènement 57 qui a été préalablement détecté automatiquement.

Selon l'analyse de l'évènement réalisée par l'unité 300 et la nature des consignes 400 émises en conséquence, un message 15a est diffusé par au moins un haut-parleur 15 situé à l'intérieur du véhicule 2 concerné par la survenue de l'évènement 57 afin d'alerter, d'informer et de fournir des consignes spécifiques le cas échéant, en s'adaptant aux spécificités des usagers transportés à l'intérieur du véhicule. Selon un mode de réalisation, le contenu du message est généré automatiquement à partir de l'unité de calcul 300 par un modèle de type intelligence artificielle générative, de façon adaptative à la nature et aux circonstances de l'évènement 57 qui a été préalablement détecté automatiquement. Selon un mode de réalisation alternatif, le contenu du message est généré à distance par un opérateur de contrôle. Selon un mode de réalisation alternatif, le contenu du message est pré-enregistré et diffusé de façon adaptative à la nature et aux circonstances de l'évènement 57 qui a été préalablement détecté automatiquement.

Selon l'analyse de l'évènement réalisée par l'unité 300 et la nature des consignes 400 émises en conséquence, un dispositif d'opacification agit sur la transparence des parois vitrées 28 du véhicule 2 concerné par la survenue de l'évènement 57, afin de s'adapter aux usagers transportés et aux contraintes spécifiques vis-à-vis de la luminosité extérieure. Selon un mode de réalisation, le niveau d'opacification est généré automatiquement à partir de l'unité de calcul 300 par un modèle de type intelligence artificielle générative, de façon adaptative à la nature et circonstances de l'évènement 57 qui a été préalablement détecté automatiquement.

Selon l'analyse de l'évènement réalisée par l'unité 300 et la nature des consignes 400 émises en conséquence, le relevage des banquettes 80 est contrôlé automatiquement dans le véhicule concerné par la survenue de l'évènement 57, afin de par exemple laisser un emplacement libre à un fauteuil roulant ou à une poussette.

Selon l'analyse de l'évènement réalisée par l'unité 300 et la nature des consignes 400 émises en conséquence, un message visuel 29a est affiché par au moins un écran 29 situé à l'intérieur du véhicule 2 concerné par la survenue de l'évènement 57 afin d'alerter, d'informer et de fournir des consignes le cas échéant, en s'adaptant aux usagers transportés à l'intérieur du véhicule. Selon un mode de réalisation, le contenu du message visuel est généré automatiquement à partir de l'unité de calcul 300 par un modèle de type intelligence artificielle générative, de façon adaptative à la nature et circonstances de l'évènement 57 qui a été préalablement détecté automatiquement. Selon un mode de réalisation alternatif, le contenu du message visuel est généré à distance par un opérateur de contrôle. Selon un mode de réalisation alternatif, le contenu du message visuel est pré-enregistré et diffusé de façon adaptative à la nature et aux circonstances de l'évènement 57 qui a été préalablement détecté automatiquement.

Des dispositifs sont susceptibles d'être activés en dehors du véhicule par les consignes 400 afin d'agir directement ou indirectement sur le véhicule 2 concerné par la survenue de l'évènement 57 en lien avec la bonne utilisation des véhicules.

Selon l'analyse de l'évènement réalisée par l'unité 300 et la nature des consignes 400 émises en conséquence, une alerte spécifique ciblée en lien avec le transport d'un usager spécifique est émise au poste de contrôle et de commande 27, avec une information envoyée à l'interface homme-machine pour identifier le véhicule concerné par la survenue de l'évènement 57 et ainsi permettre, le cas échéant, à l'opérateur en poste d'établir une communication par l'intermédiaire de l'interphonie 24 afin d'émettre des consignes spécifiques et/ou de prévenir toute personne compétente pour la prise en charge de l'évènement constaté.

Selon l'analyse de l'évènement réalisée par l'unité 300 et la nature des consignes 400 émises en conséquence, les actions suivantes sont susceptibles d'être engagées au niveau du fonctionnement de l'installation de transport par câbles 100, avec :
- Un affichage visuel et/ou sonore dédié est réalisé par un dispositif spécifique, non représenté, situé au niveau du quai de la station où est situé le véhicule afin d'émettre des informations à destination de l'usager spécifique, au cours de la phase d'embarquement et/ou de débarquement ;
- L'adaptation de la vitesse de déplacement du véhicule au niveau du quai de la station où est situé le véhicule, en temps réel et de façon adaptative au transport d'un usager spécifique, au cours de la phase d'embarquement et/ou de débarquement.

Dans un mode de réalisation, en cas de détection de la présence d'une femme ou d'un enfant seul dans un véhicule situé à quai dans la zone d'embarquement, les portes sont fermées automatiquement afin d'éviter la présence d'autres passagers au cours du trajet du véhicule, afin de renforcer le sentiment de sécurité lors des trajets nocturnes ou de façon générale en période de faible affluence.

Dans un mode de réalisation, la présence d'un usager avec une poussette ou un fauteuil roulant dans un véhicule, et qui s'apprête à sortir dudit véhicule à la prochaine station, est détectée. Cette détection s'accompagne d'une alerte automatique envoyée à une interface homme-machine à destination des opérateurs ainsi que d'une modulation automatique de la vitesse de déplacement à quai dudit véhicule afin de garantir un débarquement en toute sécurité dans la station concernée.

Dans un mode de réalisation montré par la figure 10, un évènement 58 relatif à des conditions externes au véhicule, avec une influence directe ou indirecte à l'intérieur d'un véhicule 2 en déplacement le long de l'installation de transport 100, se déclenche. Dans le mode de réalisation montré par la figure 10, l'évènement 58 est de type :
- Variation de la luminosité extérieure 58a ;
- Variation de la température 58b ;
- Variation du niveau d'humidité 58c ;
- Bourrasques de vent 58d ;
- Blocage 58e des véhicules, consécutif à une défaillance en ligne ou en station.

Des sons 580 au contenu spécifique, caractéristique des évènements 58 en lien avec des conditions externes au véhicule et avec une influence à l'intérieur du véhicule, sont susceptibles d'être émis à l'intérieur du véhicule et sont enregistrés par au moins un microphone 16 positionné à l'intérieur du véhicule. Ces sons caractéristiques sont par exemple des paroles émises par les usagers, en rapport avec les conditions de confort à l'intérieur des véhicules. Des images 581 au contenu spécifique, caractéristique des évènements 58, en lien avec des conditions externes au véhicule et avec une influence à l'intérieur du véhicule, sont captées par au moins une caméra 17 positionnée à l'intérieur du véhicule. Ces images traduisent par exemple un comportement des usagers en rapport avec les conditions de confort à l'intérieur du véhicule. L'humidité et/ou des substances gazeuses ou liquides contenue dans l'air intérieur du véhicule 582 sont détectées et/ou mesurées par au moins un capteur 20, 21. Les balancements et évolutions dynamiques du véhicule, perçues par les usagers à l'intérieur des véhicules, sont mesurées par au moins un accéléromètre 32. La température à l'intérieur du véhicule est suivie par un thermomètre 23. Au moins une balise GPS embarquée 13 repère et suit en temps réel l'évolution de la position du véhicule concerné par la survenue de l'évènement 58. Les données 200, mesurées en temps réels par les capteurs 16, 17, 18, 20, 21, 23, 26, 32, sont émises depuis le véhicule et transmises en temps réel par l'intermédiaire du module de communication 10d vers l'unité 300 d'analyse des données.

Un ensemble de consignes 400 sont transmises en temps réel par l'unité 300 vers le véhicule concerné par la survenue de l'évènement 58 et appliquées par les effecteurs positionnés à l'intérieur du véhicule, ainsi que des dispositifs disposés en d'autres points de l'installation de transport par câble et agissant sur son fonctionnement. Dans le mode de réalisation montré par la figure 10, les effecteurs 14, 15, 19, 24, 28, 29, situés à l'intérieur du véhicule concerné par la survenue de l'évènement 58, sont activés de façon simultanée et/ou différenciée par les consignes 400.

Selon l'analyse de l'évènement réalisée par l'unité 300 et la nature des consignes 400 émises en conséquence, un éclairage 14a avec une intensité et/ou une coloration et/ou un filtrage et/ou une variation au cours du temps est émis par au moins un dispositif d'éclairage 14 situé à l'intérieur du véhicule 2 concerné par la survenue de l'évènement 58, afin par exemple de s'adapter à la luminosité extérieure. Selon un mode de réalisation, la commande de l'éclairage est générée automatiquement à partir de l'unité de calcul 300 par un modèle de type intelligence artificielle générative, de façon adaptative à la nature et aux circonstances de l'évènement 58 qui a préalablement été détecté automatiquement. Selon un mode de réalisation alternatif, la commande de l'éclairage est générée à distance par un opérateur de contrôle. Selon un mode de réalisation alternatif, la commande de l'éclairage est pré-enregistrée et émise de façon adaptative à la nature et circonstances de l'évènement 58 qui a été préalablement détecté automatiquement.

Selon l'analyse de l'évènement réalisée par l'unité 300 et la nature des consignes 400 émises en conséquence, un message 15a est diffusé par au moins un haut-parleur 15 situé à l'intérieur du véhicule 2 concerné par la survenue de l'évènement 58. Selon un mode de réalisation, le contenu du message est généré automatiquement à partir de l'unité de calcul 300 par un modèle de type intelligence artificielle générative, de façon adaptative à la nature et circonstances de l'évènement 58 qui a préalablement été détecté automatiquement. Le message diffusé est par exemple un message de prévention en cas de fortes chaleurs à destination des usagers ou une annonce pour tenir les usagers informés en cas d'arrêt de l'installation. Selon un mode de réalisation alternatif, le contenu du message est généré à distance par un opérateur de contrôle. Selon un mode de réalisation alternatif, le contenu du message est pré-enregistré et diffusé de façon adaptative à la nature et aux circonstances de l'évènement 58 qui a été préalablement détecté automatiquement.

Selon l'analyse de l'évènement réalisée par l'unité 300 et la nature des consignes 400 émises en conséquence, un dispositif d'opacification agit sur la transparence des parois vitrées 28 du véhicule 2 concerné par la survenue de l'évènement 58. L'opacification des parois vitrées permet par exemple de protéger l'intérieur du véhicule des rayons lumineux extérieurs. Selon un mode de réalisation, le niveau d'opacification est généré automatiquement à partir de l'unité de calcul 300 par un modèle de type intelligence artificielle générative, de façon adaptative à la nature et circonstances de l'évènement 51 qui a été préalablement détecté automatiquement.

Selon l'analyse de l'évènement réalisée par l'unité 300 et la nature des consignes 400 émises en conséquence, un message visuel 29a est affiché par au moins un écran 29 situé à l'intérieur du véhicule 2 concerné par la survenue de l'évènement 58. Le message visuel est par exemple un spot ou un message de prévention à destination des usagers en cas de forte chaleur ou un message d'information pour tenir les usagers informés en cas d'arrêt de l'installation. Selon un mode de réalisation, le contenu du message visuel est généré automatiquement à partir de l'unité de calcul 300 par un modèle de type intelligence artificielle générative, de façon adaptative à la nature et circonstances de l'évènement 58 qui a été préalablement détecté automatiquement. Selon un mode de réalisation alternatif, le contenu du message visuel est généré par un opérateur de contrôle. Selon un mode de réalisation alternatif, le contenu du message visuel est pré-enregistré et diffusé de façon adaptative à la nature et circonstances de l'évènement 58 qui a été préalablement détecté automatiquement. Selon un mode de réalisation, le message visuel est un renvoi de l'enregistrement en temps réel d'au moins une caméra 17 située à l'intérieur du véhicule.

Selon l'analyse de l'évènement réalisée par l'unité 300 et la nature des consignes 400 émises en conséquence, un flux thermique 19a est diffusé par au moins un dispositif thermique 19 situé à l'intérieur du véhicule 2 concerné par la survenue de l'évènement 58. Le flux thermique permet de réchauffer ou de refroidir l'air contenu à l'intérieur du véhicule 2 pour le maintenir à une valeur de consigne. Selon un mode de réalisation, le contrôle du dispositif thermique 19 est généré automatiquement à partir de l'unité de calcul 300 par un modèle de type intelligence artificielle générative, de façon adaptative à la nature et aux circonstances de l'évènement 58 qui a préalablement été détecté automatiquement. Selon un mode de réalisation alternatif, la commande du dispositif thermique 19 est générée à distance par un opérateur de contrôle.

Selon l'analyse de l'évènement réalisée par l'unité 300 et la nature des consignes 400 émises en conséquence, une ventilation forcée 25a est créée par un dispositif de ventilation 25 à l'intérieur du véhicule 2 concerné par la survenue de l'évènement 58. La ventilation forcée permet, par exemple, la déshumidification de l'air ou la baisse du taux de CO2 contenu dans le véhicule 2. Selon un mode de réalisation, l'activation de la ventilation est commandée automatiquement à partir de l'unité de calcul 300 de façon adaptative à la nature et aux circonstances de l'évènement 58 qui a préalablement été détecté automatiquement.

Selon l'analyse de l'évènement réalisée par l'unité 300 et la nature des consignes 400 émises en conséquence, la balise GPS 13 repère la position des véhicules le long de la ligne et associe automatiquement le nombre d'occupants, mesuré par la caméra 17 et/ou le capteur de passage 26, afin d'évaluer les besoins organisationnels pour le plan d'évacuation des usagers. L'information peut ainsi être renvoyée vers une interface homme-machine telle qu'une tablette.

Des dispositifs sont susceptibles d'être activés en dehors du véhicule par les consignes 400 afin d'agir directement ou indirectement sur le véhicule 2 concerné par la survenue de l'évènement 58 en lien avec des conditions externes au véhicule.

Selon l'analyse de l'évènement réalisée par l'unité 300 et la nature des consignes 400 émises en conséquence, une alerte spécifique ciblée en lien avec des conditions externes au véhicule est émise au poste de contrôle et de commande 27, avec une information envoyée à l'interface homme machine pour identifier le véhicule concerné par la survenue de l'évènement 58 et ainsi permettre, le cas échéant, à l'opérateur en poste :
- D'agir par l'intermédiaire d'au moins un effecteur contrôlable à distance depuis le poste de contrôle ;
- D'établir une communication par l'intermédiaire de l'interphonie 24 afin d'émettre des consignes spécifiques et/ou de prévenir toute personne compétente pour la prise en charge de l'évènement constaté.

Selon l'analyse de l'évènement réalisée par l'unité 300 et la nature des consignes 400 émises en conséquence, les actions suivantes sont susceptibles d'être engagées au niveau du fonctionnement de l'installation de transport par câbles 100, avec :
- Un affichage visuel et/ou sonore dédié est réalisé par un dispositif spécifique non représenté situé au niveau du quai de la station où est situé le véhicule ;
- La modification de la vitesse de déplacement du câble en temps réel et de façon adaptative.

Dans un mode de réalisation, les détecteurs de mouvement 18, combinés aux caméras 17, sont utilisés pour contrôler :
- L'allumage et l'extinction de l'éclairage à l'intérieur des véhicules ;
- L'activation des écrans et autres systèmes d'information voyageur ;
- L'activation de l'ensemble des dispositifs actifs agissant pour le confort des usagers ;
- L'activation du dispositif d'opacification des parois vitrées du véhicule ;
selon l'état d'occupation des véhicules, afin d'optimiser la consommation d'énergie et limiter la pollution visuelle nocturne inutile.

Selon une analyse par l'unité 300 et la nature des consignes 400 émises en conséquence, et dans un mode de réalisation non représenté, un diffuseur d'odeur diffuse un parfum destiné à améliorer la sécurité, le confort et le ressenti des usagers transportés à l'intérieur du véhicule 2.

Dans un mode de réalisation, l'étape d'action en temps réel sur le fonctionnement de l'installation 100 est réalisée en agissant sur la vitesse de déplacement du câble 1, la modification du sens de déplacement du câble 1, sur la direction du véhicule 2 vers une voie d'isolement située dans une station 50, 60, l'activation d'un mode spécifique de fonctionnement de l'installation 100, par un affichage visuel et/ou sonore au niveau des quais des stations 50,60, la modification de la vitesse de déplacement du véhicule 2 au niveau d'un quai d'une quelconque station 50, 60, la fermeture ou l'ouverture automatique des portes du véhicule 2 au niveau d'un quai d'une quelconque station 50, 60.

Dans un mode de réalisation, l'étape d'action en temps réel consiste à envoyer une information au poste de contrôle commande 27 et/ou à une interface homme-machine de l'installation 100.

La figure 11 montre un mode de réalisation de la communication à distance établie entre les véhicules 2, les relais disposés sur les stations, pylônes et câbles aériens et l'unité de calcul 300 pour la mise en œuvre du procédé 500.

Les véhicules 2 sont dotés d'un module de communication 10d qui émet les informations issues de l'étape de mesure réalisée à l'intérieur du véhicule 2. Ces informations sont transmises, selon la position du véhicule le long de l'installation de transport par câble, à des relais situés à proximité du véhicule. Ces relais sont des modules de communication 10a situés sur les câbles aériens situés entre les pylônes, des modules 10b situés sur les pylônes ou des modules 10c situés sur les stations.

Les modules relais 10a, 10b, 10c sont susceptibles de communiquer entre eux afin d'émettre et recevoir des informations à distance.

Les informations transmises le long de l'installation de transport par câbles par l'intermédiaire des modules 10d situés sur les véhicules et des modules relais 10a, 10b, 10c sont envoyées vers l'unité de de calcul 300.

L'unité de calcul 300 émet des informations 400 qui sont ensuite transmises à distance le long de l'installation de transport par câbles vers les véhicules et/ou les dispositifs de commande de fonctionnement de l'installation.

La description du procédé de contrôle 500 de la sécurité et du confort à l'intérieur d'un véhicule d'une installation de transport de véhicules par câbles et des dispositifs configurés pour le mettre en œuvre est développée pour un système de transport par câble mobile muni de plusieurs véhicules, de type cabine, répartis le long d'une unique boucle de câble et à laquelle ils sont accrochés. Le principe détaillé dans cette description reste néanmoins valable pour les dispositifs munis d'autres types de véhicules, avec plusieurs boucles de câbles et des stations intermédiaires, des dispositifs à va-et-vient et à mouvement continu, muni d'un unique ou de plusieurs véhicules sur chaque voie, d'un ou plusieurs câbles mobiles et/ou fixes reliés aux véhicules.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de contrôle (500) de la sécurité et du confort à l'intérieur d'un véhicule (2) d'une installation de transport de véhicules par câbles (100), **caractérisé en ce que** le procédé comprend au moins tout ou partie des étapes suivantes :
- Une étape de mesure et/ou d'enregistrement en temps réel de données (200), vidéos et/ou sonores et/ou d'un ou de plusieurs paramètres physiques, à l'intérieur d'un véhicule (2) d'une installation de transport par câble susceptibles de caractériser la survenue d'un évènement (51, 52, 53, 54, 55, 56, 57, 58) relatif à la sécurité et/ou la sureté et/ou l'intégrité du matériel et/ou l'utilisation et/ou le confort des usagers, la mesure étant réalisée par un ensemble de capteurs (9) ;
- Une étape de transmission en temps réel des données (200) vers une unité de calcul (300), par l'intermédiaire d'un réseau de modules de communication (10a, 10b, 10c, 10d) ;
- Une étape de traitement automatique en temps réel des données (200) issues des mesures et/ou des enregistrements en temps réel à l'intérieur du véhicule (2), le traitement étant réalisé par l'unité de calcul (300) ;
- Une étape de détection automatique et en temps réel d'un évènement (51, 52, 53, 54, 55, 56, 57, 58) relatif à la sécurité et/ou la sureté et/ou l'intégrité du matériel et/ou l'utilisation et/ou le confort des usagers, par une analyse des données (200) issues des mesures par les capteurs (9), la détection étant réalisée par un module de détection (201) intégré dans l'unité de calcul (300) ;
- Une étape de génération automatique, en temps réel et adaptative d'une consigne (400) à partir de l'étape de détection d'un évènement et par une analyse des données (200) issues des mesures par les capteurs (9), la génération de consigne étant réalisée par un module de commande (401) intégré dans une unité de calcul (300) ;
- Une étape d'action automatique selon la consigne (400), en temps réel et adaptative à l'évènement détecté, avec le contrôle d'un dispositif (12) agissant à l'intérieur d'un véhicule (2), et/ou d'un dispositif situé en d'autres points de l'installation (100) et/ou sur d'autres systèmes agissant sur le fonctionnement de l'installation de transport par câble (100).

2. Procédé de contrôle (500) selon la revendication précédente, au cours duquel l'étape de mesure de données (200) vidéos et/ou sonores et/ou d'un ou de plusieurs paramètres physiques à l'intérieur d'un véhicule (2) est réalisée par au moins un des capteurs (9) positionnés à l'intérieur des véhicules (2), les capteurs (9) pouvant être une balise GPS (13), un microphone (16), une caméra (17), un détecteur de mouvement (18), un capteur de concentration de composants gazeux (20), un détecteur de fumée (21), un détecteur de luminosité (22), un thermomètre (23), un capteur de passage (26), une caméra thermique (31), un accéléromètre (32).

3. Procédé de contrôle (500) selon la revendication 1, au cours duquel des modules de communications (10a, 10b, 10c, 10d) transmettent à distance les données (200) et la consigne (400) entre les véhicules (2) et l'unité de calcul (300) via des pylônes (3), des stations (50, 60), des câbles aériens (11).

4. Procédé de contrôle (500) selon la revendication 1, au cours duquel l'étape de traitement automatique en temps réel des données (200) consiste à appliquer des techniques d'analyse des données appartenant au champ du traitement du signal telles que le filtrage, la compression, la réduction de bruit, la déconvolution, la prédiction, l'identification, la classification, par une unité de calcul (300).

5. Procédé de contrôle (500) selon la revendication 1, au cours duquel l'étape de détection d'un évènement (51, 52, 53, 54, 55, 56, 57, 58) à l'intérieur du véhicule (2) consiste en l'analyse des données (200) par un module de détection (201), à partir de modèles de reconnaissance automatique d'image, de sons et la classification de données, selon des techniques d'apprentissage automatique et d'intelligence artificielle.

6. Procédé de contrôle (500) selon la revendication 1 ou la revendication 5, au cours duquel des paramètres de réglage du module de détection (201) sont renseignés par un utilisateur afin d'établir un seuil à partir duquel l'évènement détecté est classé automatiquement dans une catégorie donnée.

7. Procédé de contrôle (500) selon la revendication 1, la revendication 5 ou la revendication 6, au cours duquel le module de détection (201) est entraîné sur un ensemble de jeux de données d'apprentissage étiquetées.

8. Procédé de contrôle (500) selon la revendication 1, au cours duquel l'étape de génération automatique de la consigne (400) consiste à résoudre un problème d'optimisation, à partir d'un apprentissage automatique et/ou à partir de modèles de prédiction basés sur une description de la physique sous-jacente au phénomène considéré, visant à maximiser le niveau de sécurité, la sureté, la bonne utilisation et le confort des usagers transportés dans les véhicules (2) de l'installation de transport par câbles (100).

9. Procédé de contrôle (500) selon la revendication 1 ou la revendication 8, au cours duquel la consigne (400) est générée à partir de modèles reposant sur les techniques de l'intelligence artificielle générative capable de générer du nouveau contenu, sous plusieurs formes, comme du texte, une image, un fichier audio ou du code logiciel, en modélisant les caractéristiques des données tirées des jeux de données qui alimentent le modèle.

10. Procédé de contrôle (500) selon la revendication 1, la revendication 8 ou la revendication 9, au cours duquel le module de commande (401) est entraîné sur un ensemble de jeux de données d'apprentissage étiquetées.

11. Procédé de contrôle (500) selon la revendication 1, au cours duquel l'étape d'action en temps réel à l'intérieur d'un véhicule (2) est réalisée par au moins un effecteur (12) positionné à l'intérieur des véhicules (2), l' effecteur (12) pouvant être un éclairage d'intensité variable (14), un haut-parleur (15), un bloc de climatisation ou de chauffage (19), un interphone (24), un écran (29), une ventilation (25), un dispositif d'opacification (28) des parois vitrées, un siège (80) amovible, un dispositif d'extinction d'incendie, un diffuseur d'odeur.

12. Procédé de contrôle (500) selon la revendication 1, au cours duquel l'étape d'action en temps réel sur le fonctionnement de l'installation (100) est réalisée en agissant sur la vitesse de déplacement du câble (1), la modification du sens de déplacement du câble (1), sur la direction du véhicule (2) vers une voie d'isolement située dans une station (50, 60), l'activation d'un mode spécifique de fonctionnement de l'installation (100), par un affichage visuel et/ou sonore au niveau des quais des stations (50,60), la modification de la vitesse de déplacement du véhicule (2) au niveau d'un quai d'une quelconque station (50, 60), la fermeture ou l'ouverture automatique des portes du véhicule (2) au niveau d'un quai d'une quelconque station (50, 60).

13. Procédé de contrôle (500) selon la revendication 1, au cours duquel l'étape d'action en temps réel consiste à envoyer une information à un poste de contrôle commande (27) et/ou à une interface homme-machine de l'installation (100).

14. Procédé de contrôle (500) selon l'une quelconque des revendications précédentes, au cours duquel l'unité de calcul (300) analyse les données (200) pour en extraire des indicateurs et établir un suivi des évènements rencontrés, avec un couplage avec un outil d'aide à la décision tel qu'un logiciel de gestion de maintenance, un registre d'exploitation, un rapport de sécurité et d'exploitation ou tout support de communication de données.

15. Programme d'ordinateur comprenant des portions de codes de programme pour l'exécution des étapes du procédé de contrôle (500) d'une installation de transport de véhicules par câble à mouvement continu (100) selon l'une des revendications 1 à 14, lorsque ledit programme est exécuté sur un ordinateur.
